# EUROPEAN PATENT SPECIFICATION

(11) **EP 3 146 763 B1**
(45) Date of publication and mention of the grant of the patent: **06.02.2019**
(21) Application number: 14731079.1
(22) Date of filing: 23.05.2014
(51) Int. Cl.: H04W 76/14, H04W 8/00, H04W 72/04

(54) **A USER EQUIPMENT, A NETWORK NODE AND METHODS THEREIN FOR ENABLING RADIO ADMISSION CONTROL (RAC) OF DEVICE-TO-DEVICE (D2D) SERVICES**
BENUTZERGERÄT, NETZWERKKNOTEN UND VERFAHREN DARIN ZUR ERMÖGLICHUNG DER FUNKZULASSUNGSSTEUERUNG (RAC) VON VORRICHTUNG-ZU-VORRICHTUNG (D2D)-DIENSTEN
ÉQUIPEMENT UTILISATEUR, NOEUD DE RÉSEAU ET PROCÉDÉS ASSOCIÉS POUR PERMETTRE UNE COMMANDE D'ADMISSION RADIO (RAC) DE SERVICES DE DISPOSITIF À DISPOSITIF (D2D)

(43) Date of publication of application: 29.03.2017
(73) Proprietor: Telefonaktiebolaget LM Ericsson (publ), 164 83 Stockholm (SE)
(72) Inventor: FODOR, Gabor, SE-165 52 Hässelby (SE); BARROS DA SILVA JUNIOR, Jose Mairton, 164 47 Stockholm (SE); BELLESCHI, Marco, SE-171 66 Solna (SE); KAZMI, Muhammad, 174 64 Sundbyberg (SE)
(74) Representative: Zacco Sweden AB
(86) International application number: PCT/SE2014/050638
(87) International publication number: WO 2015/178814

(56) References cited:
- WO-A1-2011/109941
- WO-A1-2011/147468
- WO-A1-2013/133738
- WO-A1-2014/048397
- GB-A- 2 506 118
- US-A1- 2010 009 675

## Description

### TECHNICAL FIELD

Embodiments herein relate to Device-to-Device, D2D, communication between user equipments in a radio communications network. In particular, embodiments herein relate to enabling Radio Admission Control, RAC, of at least one Device-to-Device, D2D, service requested by a first user equipment for a D2D communication with a second user equipment in a radio communications network.

### BACKGROUND

In a typical radio communications network, wireless terminals, also known as mobile stations, terminals and/or user equipments, UEs, communicate via a Radio Access Network, RAN, to one or more core networks. The radio access network covers a geographical area which is divided into cell areas, with each cell area being served by a base station, e.g. a radio base station, RBS, or network node, which in some networks may also be called, for example, a "NodeB" or "eNodeB". A cell is a geographical area where radio coverage is provided by the radio base station at a base station site or an antenna site in case the antenna and the radio base station are not collocated. Each cell is identified by an identity within the local radio area, which is broadcast in the cell. Another identity identifying the cell uniquely in the whole mobile network is also broadcasted in the cell. One base station may have one or more cells. A cell may be downlink and/or uplink cell. The base stations communicate over the air interface operating on radio frequencies with the user equipments within range of the base stations.

A Universal Mobile Telecommunications System, UMTS, is a third generation mobile communication system, which evolved from the second generation, 2G, Global System for Mobile Communications, GSM. The UMTS terrestrial radio access network, UTRAN, is essentially a RAN using wideband code division multiple access, WCDMA, and/or High Speed Packet Access, HSPA, for user equipments. In a forum known as the Third Generation Partnership Project, 3GPP, telecommunications suppliers propose and agree upon standards for third generation networks and UTRAN specifically, and investigate enhanced data rate and radio capacity. In some versions of the RAN as e.g. in UMTS, several base stations may be connected, e.g., by landlines or microwave, to a controller node, such as a radio network controller, RNC, or a base station controller, BSC, which supervises and coordinates various activities of the plural base stations connected thereto. The RNCs are typically connected to one or more core networks.

Specifications for the Evolved Packet System, EPS, have been completed within the 3^{rd} Generation Partnership Project, 3GPP, and this work continues in the coming 3GPP releases. The EPS comprises the Evolved Universal Terrestrial Radio Access Network, E-UTRAN, also known as the Long Term Evolution, LTE, radio access, and the Evolved Packet Core, EPC, also known as System Architecture Evolution, SAE, core network. E-UTRAN/LTE is a variant of a 3GPP radio access technology wherein the radio base station nodes are directly connected to the EPC core network rather than to RNCs. In general, in E-UTRAN/LTE the functions of a RNC are distributed between the radio base stations nodes, e.g. eNodeBs in LTE, and the core network. As such, the Radio Access Network, RAN, of an EPS has an essentially flat rather than hierarchical architecture comprising radio base station nodes without reporting to RNCs.

### D2D communications in cellular spectrum

D2D communications in the cellular spectrum is a means of increasing the spectrum utilization, since a pair of UEs communicating in D2D mode may reuse the cellular spectrum resources, such as, e.g. Physical Resource Blocks, PRB, of a 3GPP LTE system.

Existing Radio Resource Management, RRM, techniques concerned with radio resource allocation, power control, mode selection, and scheduling, typically focus on minimizing the impact of D2D communication on the cellular radio traffic, increasing the overall spectral, energy efficiency and handling seamless mobility between the cellular and D2D communications. In existing D2D communications, the D2D communication may use cellular Uplink, UL, and/or Downlink, DL, radio resources that may overlap with the radio resources used for supporting cellular radio traffic. The radio resources used by the D2D communication may comprise PRBs that are used for the control of the D2D traffic by the cellular base station, e.g. an eNB, PRBs used by the D2D traffic, and the PRBs used for neighbor (peer) discovery by the D2D capable UE.

Thus, the different types of D2D traffic, i.e. on the control plane, user plane and for discovery, impose an extra load on the cellular radio resources that is not present in radio communications networks that do not support D2D communication.

### Radio Admission Control, RAC

Radio Admission Control, RAC, is a means to accept or reject a Radio Bearer (RB) Setup Request. This may sometimes also be referred to as an Evolved Packet System, EPS, or System Architecture Evolution, SAE, bearer service by the Core Network, CN, of the radio communications network. In the 3GPP LTE system, RAC is exercised by the base station, i.e. the LTE eNB. The RAC, or RAC algorithms, are conventionally proprietary, but they are typically designed for maintaining the Quality of Service, QoS, of ongoing RBs, which also may be referred to as retainability. This while also ensuring high resource utilization and system stability. Specifically, the purpose of RAC is to admit SAE/EPS RBs, i.e. cellular RBs, as long as radio resources are available to provide QoS for in-progress cellular RBs and for the newly arrived cellular RBs, in addition to also ensuring system stability. The RAC may also interchangeably be referred to as Admission Control (AC), radio access admission control, radio network admission control, network admission control, radio interface admission control, session admission control, call admission control, radio link admission control, radio bearer admission control or similar terms. For the sake of consistency hereinafter the term RAC is used.

RAC typically checks the availability of radio resources when setting up Guaranteed Bit Rate, GBR, RBs, for which - if admitted - a minimum (guaranteed) bit rate should be provided. Some rudimentary RAC may also be exercised for so-called best effort SAE/EPS RBs in order to maintain system stability. RAC typically takes into account the available radio resources, i.e. on the UL and/or DL, as well as, internal BS/eNB resources, the QoS class identifiers, QCI, of the ongoing cellular RBs, and the QCI of the RB requested. In the 3GPP LTE system, for example, there are standardized QCI-s for GBR and non-GBR services associated with delay requirements, packet error loss rate and priority level.

Along with radio resources, such as, e.g. PRB utilization, physical downlink/uplink control channel (PDCCH/PUCCH) resources, and also computational resources, such as, e.g. eNB baseband capacity utilization, Scheduling Entities or Transmission Time Interval (SE/TTI) utilization, and limit on RB configurations, such as, e.g. maximum number of Radio Resource Control (RRC) Connected UEs per cell, max numbers of active bearers per cell, etc., are typically used by RAC.

In this perspective, RAC protects the cell from congestion risks that may comprise service integrity and retainability of the served high-priority RBs, such as, e.g. GBR BRs, especially in highly loaded scenarios. At the same time, RAC ensures a certain degree of accessibility to radio resources for services that have high priority, such as, e.g. emergency calls, or privileged access, such as, e.g. business subscriptions.

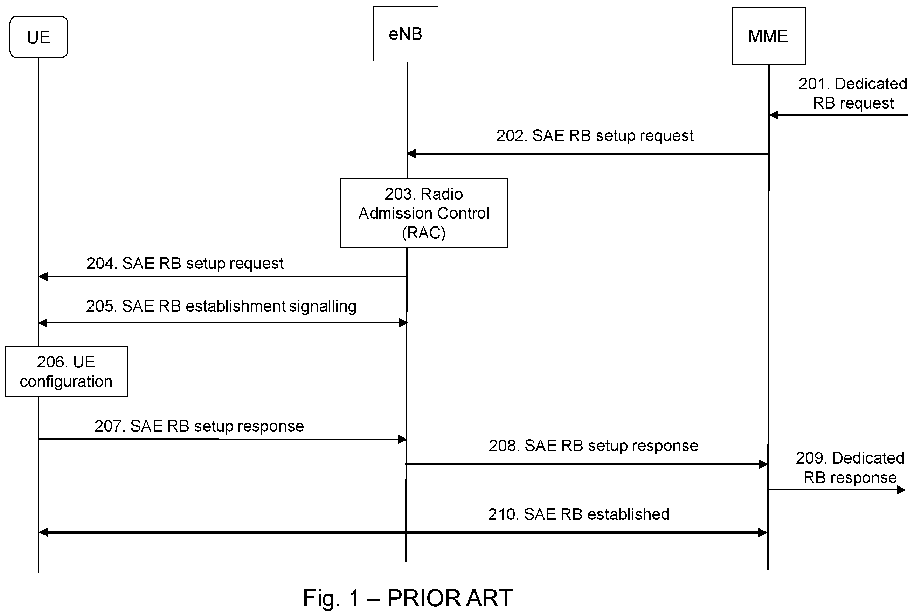

**Figure 1** is a signalling diagram showing an example of RAC procedure as exercised by a Release 8 LTE radio communications network. Here, a SAE bearer service is established between a UE and a Mobility Management Entity, MME, in the Core Network, CN, in the radio communications network via Actions 201-209.

In **Action 201**, the MME receives a dedicated RB request. This may be a request to create a dedicated RB for a cellular communication, and may comprise QoS information. Then, in **Action 202**, the MME sends a SAE Radio Bearer Setup Request to the eNB. In **Action 203**, the eNB performs RAC for the requested cellular RB. The RAC is exercised by the eNB based on the current load of the RAN and the QoS requested by the MME. This may comprise allocating radio resources, and configuring a scheduler and/or Media Access Control, MAC, in the eNB. Then, in **Action 204**, the eNB send a SAE Radio Bearer Request to the UE, e.g. using Radio Resource Control, RRC, signalling. This may, for example, comprise an RB ID and other RB associated parameters. In **Action 205**, the UE and the eNB may perform cellular RB establishment signalling. In **Action 206**, the UE performs internal configurations based on the cellular RB establishment signalling, followed by a SAE RB setup response to the eNB. In **Actions 207-210**, SAE RB setup responses are propagated back to the requesting entity, establishing the dedicated cellular RB between the UE and the MME.

As can be seen above, a RAC in general has the task of keeping the overall load on the radio resources within a feasible region in which the RAN remains stable and is able to deliver the expected QoS. However, when D2D communication is supported in the radio communications network, not only the load of cellular RBs, but also the load of D2D RBs will impact the QoS of both the cellular and the D2D communications.

WO2011109941A1 relates to setting up cellular controlled D2D communications. A first device sends a request to a radio network node to initiate D2D communication with a second device. The request comprises an identification of the second device and a first indicator indicating an intention of a D2D type of the communication. The first device receives, from the radio network node, a resource allocation, and transmits service contents in the D2D communication directly between the first device and the second device using the allocated resources.

GB2506118A discloses that a UE generates a message comprising a request to setup a D2D bearer, an identifier of the destination user equipment and information on the MME identifier of the destination UE. The message may also indicate that the bearer is for an existing application flow to the destination UE. The message is received by a network node which then sets up the D2D communication. The network node may send to the MME of the destination UE a message to relocate the destination UE to the MME of the requesting UE.

WO2014048397A1 discloses that an MME receives a request message to be used for requesting communication in a D2D path. The MME sends a bearer resource processing request message to a GW for notifying to switch a network-side data path from a CN path to the D2D path for transmission.

### SUMMARY

The invention is defined by the subject-matter of the independent claims. Advantageous embodiments are subject to the dependent claims. It is an object of examples herein to improve Radio Admission Control, RAC, in a radio communications network supporting both cellular and D2D communications.

According to a first aspect herein, the object is achieved by a method performed by a first User Equipment, UE, for enabling Radio Admission Control, RAC, of at least one Device-to-Device (D2D) service for a D2D communication with a second UE in a radio communications network. The first UE transmits a D2D service request comprising at least one D2D service type indicator indicating the at least one D2D service to a first network node in the radio communications network. Then, the first UE receives a RAC grant message or a RAC reject message in response to the transmitted D2D service request.

According to a second aspect herein, the object is achieved by a first UE for enabling RAC of at least one D2D service for a D2D communication with a second UE in a radio communications network. The first UE is configured to transmit a D2D service request comprising at least one D2D service type indicator indicating the at least one D2D service to a first network node in the radio communications network. The first UE is also configured to receive a RAC grant message or a RAC reject message in response to the transmitted D2D service request.

According to a third aspect herein, the object is achieved by a method performed by a Radio Access Network (RAN) node for enabling RAC of at least one D2D service requested by a first UE for a D2D communication with a second UE in a radio communications network. The RAN node receives a D2D service request or a second D2D radio bearer setup request for at least one D2D radio bearer comprising at least one D2D service type indicator indicating the at least one requested D2D service. Then, the RAN node performs RAC of the requested D2D service by determining whether or not there is sufficient radio resources available to support a D2D communication performed in accordance with the requested D2D service based on the at least one D2D service type indicator.

According to a fourth aspect herein, the object is achieved by a RAN node for enabling RAC of at least one D2D service requested by a first UE for a D2D communication with a second UE in a radio communications network. The RAN node is configured to receive a D2D service request or a second D2D radio bearer setup request for at least one D2D radio bearer comprising at least one D2D service type indicator indicating the at least one requested D2D service. The RAN node is also configured to perform RAC of the requested D2D service by determining whether or not there is sufficient radio resources available to support a D2D communication performed in accordance with the requested D2D service based on the at least one D2D service type indicator.

According to a fifth aspect herein, the object is achieved by a method performed by a first Core Network, CN, node for enabling RAC of at least one D2D service requested by a first UE for a D2D communication with a second UE in a radio communications network. The first CN node receives a D2D service request comprising at least one D2D service type indicator indicating the at least one requested D2D service from the first UE. Then, the first CN node determines at least one radio bearer for the at least one requested D2D service based on the at least one received D2D service type indicator. After said determination, the first CN node transmits a first D2D radio bearer setup request for the determined at least one D2D radio bearer to a second CN node in the radio communications network comprising the at least one D2D service type indicator.

According to a sixth aspect herein, the object is achieved by a first CN node for enabling RAC of at least one D2D service requested by a first UE for a D2D communication with a second UE in a radio communications network. The first CN node is configured to receive a D2D service request comprising at least one D2D service type indicator indicating the at least one requested D2D service from the first UE. The first CN node is also configured to determine at least one radio bearer for the at least one requested D2D service based on the at least one received D2D service type indicator. The first CN is further configured to transmit a first D2D radio bearer setup request for the determined at least one D2D radio bearer to a second CN node in the radio communications network comprising the at least one D2D service type indicator.

According to a seventh aspect herein, the object is achieved by a method performed by a second CN node for enabling RAC of at least one D2D service requested by a first UE for a D2D communication with a second UE in a radio communications network. The second CN node receives a first D2D radio bearer setup request for at least one D2D radio bearer from a first CN node in the radio communications network comprising the at least one D2D service type indicator. Then, the second CN node transmits a second D2D radio bearer setup request for the at least one D2D radio bearer to a RAN node serving the first UE in the radio communications network comprising the at least one D2D service type indicator.

According to an eight aspect herein, the object is achieved by a second core network node for enabling RAC of at least one D2D service requested by a first UE for a D2D communication with a second UE in a radio communications network. The second CN node is configured to receive a first D2D radio bearer setup request for at least one D2D radio bearer from a first CN node in the radio communications network comprising the at least one D2D service type indicator. The second CN node is also configured to transmit a second D2D radio bearer setup request for the at least one D2D radio bearer to a RAN node serving the first UE in the radio communications network comprising the at least one D2D service type indicator.

According to a ninth aspect herein, the object is achieved by computer programs, comprising instructions which, when executed on at least one processor, cause the at least one processor to carry out the methods described above. According to a tenth aspect of embodiments herein, the object is achieved by a carrier containing the computer program described above, wherein the carrier is one of an electronic signal, optical signal, radio signal, or computer readable storage medium.

By having a first UE transmitting a D2D service request, which comprises at least one D2D service type indicator indicating at least one D2D service for a D2D communication with a second UE, to a first network node, the first UE may explicitly signal to the first network node the Quality of Service, QoS, requirements of the at least one D2D RB that the first UE wants to use in the D2D communication with the second UE. The first network node may here be a RAN node or a CN node in the radio communications network.

This enables a RAN node serving the first UE in the radio communications network to perform a RAC extended to further comprise the acceptance/rejection of D2D RBs and not only the acceptance/rejection of cellular RBs as in existing RACs, and accept/reject the requested D2D bearer of the first UE. In this way and according to an advantage of embodiments herein the RAN node is able to monitor and control the combined cellular and D2D load on its radio resources.

Another advantage is that this will ensure that new D2D communications between UEs are admitted in the radio communications network only when there are sufficient radio and network resources available. Hence, an improved RAC in the radio communications network supporting both cellular and D2D communications is provided providing yet another advantage.

### BRIEF DESCRIPTION OF THE DRAWINGS

Embodiments will now be described in more detail in relation to the enclosed drawings.
- Figure 1: is a signalling diagram for RAC according to prior art,
- Figure 2: is a schematic block diagram illustrating embodiments of user equipments, a RAN node, and CN nodes in a radio communications network,
- Figure 3: is a signalling diagram for RAC according to embodiments of a user equipments, a RAN node, and CN nodes in a radio communications network,
- Figure 4: is a flowchart depicting embodiments of a method in a user equipment,
- Figure 5: is a flowchart depicting embodiments of a method in a RAN node,
- Figure 6: is a flowchart depicting embodiments of a method in a first CN node,
- Figure 7: is a flowchart depicting embodiments of a method in a second CN node,
- Figure 8: is a signalling diagram depicting embodiments of a method in a user equipment and a RAN node,
- Figure 9: is a flowchart depicting embodiments of a method in a user equipment,
- Figure 10: is a flowchart depicting embodiments of a method in a RAN node,
- Figure 11: is a schematic block diagram depicting embodiments of a user equipment,
- Figure 12: is a schematic block diagram depicting embodiments of a RAN node,
- Figure 13: is a schematic block diagram depicting embodiments of a first CN node,
- Figure 14: is a schematic block diagram depicting embodiments of a second CN node.

### DETAILED DESCRIPTION

The figures are schematic and simplified for clarity, and they merely show details which are essential to the understanding of the embodiments presented herein, while other details have been left out

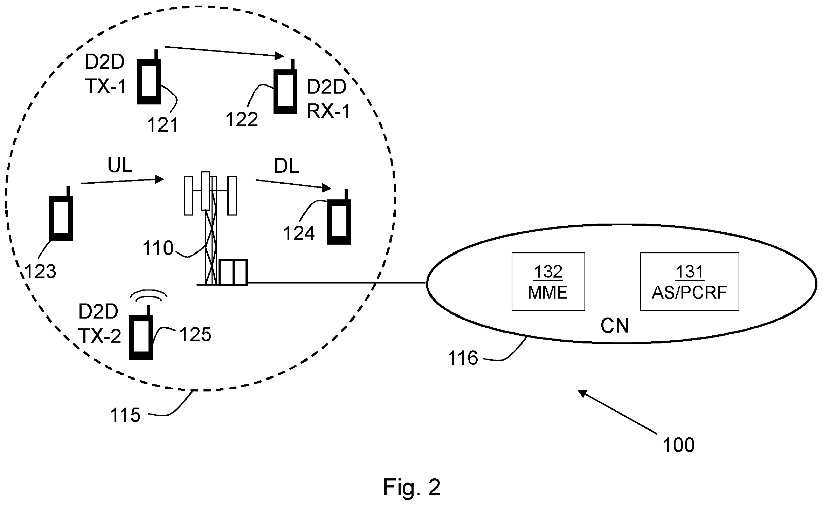

**Figure 2** shows an example of a **radio communication network 100** in which embodiments herein may be implemented. Although illustrated in the example of Figure 2 as an LTE network, the wireless communications network 100 may be any wireless communication system, such as, LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), Ultra Mobile Broadband (UMB) or GSM network, or other 3GPP cellular network or system. The radio communications system 100 comprises a **Random Access Network, RAN, node 110**.

The RAN node 110 may e.g. be an eNodeB (eNB), or a Home Node B, a Home eNode B, femto Base Station (BS), pico BS or any other network unit capable to serve UEs in the radio communications system 100. The RAN node 110 may also be e.g. a base station controller, a network controller, a relay node, a repeater, an access point, a radio access point, a Remote Radio Unit (RRU) or a Remote Radio Head (RRH). Furthermore, the RAN node 110 may comprise one or more antennas for wireless radio communication with UEs, located within the antennas coverage range; that is, the RAN node 110 may use one or more of its antennas to provide radio coverage within its cell.

In the example shown in Figure 2, the RAN node 110 is configured to provide wireless radio coverage to UEs in its **cell 115**. A cell may be seen as a geographical area where radio coverage is provided by radio base station equipment at a base station site or at remote locations in Remote Radio Units (RRU). The cell definition may also incorporate frequency bands and radio access technology used for transmissions, which means that two different cells may cover the same geographical area but using different frequency bands. Each cell is identified by an identity within the local radio area, which is broadcast in the cell. Another identity identifying each cell uniquely in the whole radio communication network 100 may also be broadcasted in the cell. The network node 110 communicates over the air or radio interface operating on radio frequencies with the UEs within range of the network node 110.

The RAN node 110 is also connected and configured to communicate with a Core Network, CN, of the radio communications network 100. In the example shown in Figure 2, the CN may comprise a Mobility Management Entity, MME 131, which also may be referred to herein as the first CN node. The MME 131 may be connected to and selected by the RAN node 100 to provide different functions, such as, Non-Access Stratum, NAS, signalling, EPS bearer management, Roaming functions, etc., in the CN. In the example shown in Figure 2, the CN may also comprise an Application Server and/or Policy Control and Resource Function, AS/PCRF 132, which also may be referred to herein as the second CN node. The AS/PCRF 132 may be a server/function to provide mobile operator's applications in the radio communications network 100 or to provide policy and charging functions in the radio communications network 100.

Furthermore, in the example of Figure 2, a number of UEs are located within the cell 115. The UEs are configured to communicate within the radio communications network 100 via the RAN node 110 over a radio link when present in the cell 115 served by the RAN node 110. Some of the UEs in the cell 115 may also be capable of communicating directly with other UEs using wireless D2D communication over direct D2D links, rather than via the RAN node 110. Each of the UEs may e.g. be any kind of wireless device such as a mobile phone, a cellular phone, a Personal Digital Assistant (PDA), a smart phone, a tablet, a sensor equipped with a UE, Laptop Mounted Equipment (LME) (e.g. USB), Laptop Embedded Equipment (LEE), Machine Type Communication (MTC) device, a UE with D2D capability, Customer Premises Equipment (CPE), or any other radio network unit capable to communicate over a radio link in the radio communications network 100. The UEs may also be a Machine-to-Machine, M2M, communication device that serves as a data communication modem or is built into equipment communicating data with a server without human interaction.

In the example shown in Figure 2, **a first and second UE 121, 122** are located in the cell 115, e.g. a D2D pair of UEs comprising a transmitting UE, D2D TX-1, and a receiving UE, D2D RX-1. The first and second UE 123 and 124 may communicate in the cellular spectrum in the cell 115 using a direct D2D link. This means that the first and second UE 121, 122 are capable of communicating with each other using D2D communication. This may be performed over an established D2D link. This means that the first and second UE 121, 122 may discover each other, establish a D2D communication, and perform D2D communication in the radio communications network 100. The radio resource in the cellular spectrum in the cell 115 used by the D2D communication may at least partly overlap with the radio resources used by the cellular communications of other UEs in the cell 115. For example, in the example shown in Figure 2, a **third and fourth UE 123, 124** are also located within the cell 115, and communicate with the RAN node 110 using conventional cellular communication on the UL/DL. Also, in the example shown in Figure 2, **a fifth UE 125** is located within the cell 115, and is transmitting a beacon for D2D peer discovery, which may also utilize the radio resources used by cellular communications, i.e. cellular Peer Discovery Resources, PDR.

The RAN node 110 is configured to perform RAC for requested cellular RBs in the cell 115, such as, e.g. for the third and fourth UE 123, 124, and also, as described in embodiments below, configured to perform RAC for requested D2D RBs in the cell 115.

Although embodiments below are described with reference to the scenario of Figure 2, this scenario should not be construed as limiting to the embodiments herein, but merely as an example made for illustrative purposes.

As part of developing the embodiments herein, it has been noticed that a problem with existing Random Access Control operations (RAC), including the signalling support between UEs, RAN nodes and CN nodes in the radio communications network, is that they cannot take into account the load and QoS requirements of D2D communication since they are designed only for cellular radio communications networks. Therefore, in a radio communications network which supports D2D communications, these existing RACs cannot serve the purpose of providing QoS and maintaining system stability.

For example, when a D2D communication, no matter if it takes place on the user plane, the control plane or as part of discovery, uses the cellular spectrum, the existing RACs may fail to ensure QoS for the ongoing cellular RBs and thus fail to maintain system stability. This is because existing RACs do not consider the impact of the D2D communication on the cellular communications. This is also true for the other way around, that is, existing RAC techniques do not consider the impact of the cellular communications on the D2D communications, which may lead to severe performance degradation of D2D traffic or D2D discovery. A further issue is that, when a D2D communication is introduced in the radio communications network, existing RACs cannot distinguish between different D2D bearers on the basis of e.g. subscription data or service related profiles that different D2D users may subscribe to or request.

In accordance with embodiments described herein, these issues are addressed by designing a RAC functionality or operation that is applicable in radio communications networks which supports D2D communications. In particular, these issues are addressed by having a UE signalling a D2D service request for the D2D service that the UE wants to use in the D2D communication with another UE in the radio communications networks. The RAN node serving the first UE in the radio communications network may then perform an extended RAC configured to accept/reject both cellular and D2D RBs, and thus keep track of the combined cellular and D2D load on its radio resources. Hence, an improved RAC in the radio communications network supporting both cellular and D2D communications is provided.

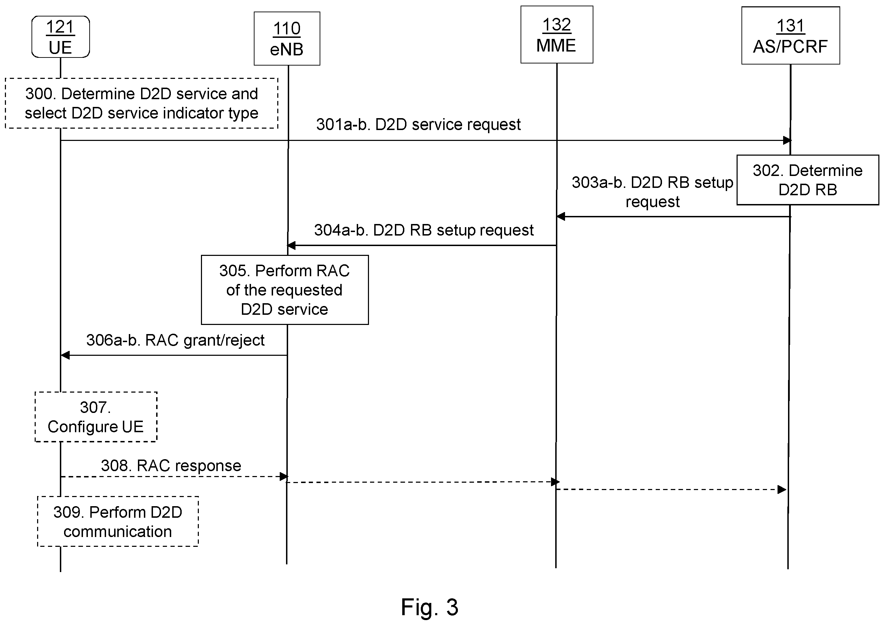

Example of embodiments of methods performed by the first UE 121, the RAN node (eNB) 110, the first CN node 131, and the second CN node 132, will now be described with reference to the schematic signalling diagram depicted in Figure 3.

**Figure 3** is a simplified illustrated example of actions or operations which may be taken by the involved nodes and user equipment.

### Action 300

In this optional action, the first UE 121 may determine a D2D service. This means that the first UE 121 may determine at least one D2D service to be used for the D2D communication with the second UE 122 (not shown), and select at least one D2D service type indicator indicating the determined at least one D2D service.

### Action 301a

Here, the first UE 121 transmits a D2D service request to a first CN node 131. This means that the first UE 121 transmits a D2D service request comprising at least one D2D service type indicator indicating the at least one D2D service to a first network node in the radio communications network 100 (not shown). In this case, the first network node is a first CN node 131 in the radio communications network .

In some embodiments, the D2D service type indicator may be a QoS class identifier, QCI. This means that each requested D2D service may be indicated using a QoS class identifier, QCI. This may be performed, e.g. by adding to the already standardized QCI = {1, ..., 9} which may indicate e.g. legacy UEs, UEs without D2D capability, or UEs with D2D capability but are not currently using its D2D operation, new QCI numbers indicating each of the requested D2D services. This is exemplified below.

In some embodiments, the at least one requested D2D service is one or more of the following service types:
- a D2D service requiring at least one D2D RB for D2D communication with the second UE 122, wherein the first UE 121 is also configured with a cellular service requiring at least one cellular RB. For example, this type may be given QCI = 10.
- a D2D service requiring D2D discovery resources to discover the second UE 122. For example, this type, e.g. only requiring access to a set of Peer Discovery Resources, PDRs, may be given QCI = 11.
- a D2D service requiring at least one D2D RB for D2D communication with the second UE 122. However, in this case, contrary to the service type mentioned first above, the UE 121 is here not configured with a cellular service requiring at least one cellular RB. For example, this type may be given QCI = 12.
- a D2D service requiring D2D discovery resources for receiving discovery signals from the second UE 122. For example, this type, e.g. requiring only reception but no transmission of a D2D RB, may be given QCI = 13. An example of this type is a UE which may be interested in discovering neighboring UEs that broadcast a beacon signal on PDRs. This type may benefit of high signal-to-noise-and-interference ratio of such PDRs in terms of discovery probability based on the reception of beacons.
- a D2D service requiring at least one D2D RB for D2D communication with the second UE 122 without network-assisted control signalling. This type basically requires a set of radio resources for a longer time period, such as, e.g. minutes or more, rather than requiring a continuous cellular network supervision or assistance. This category of UEs may be useful for stationary UEs or low energy type of UEs, e.g. a sensor-type UE. This type may also be divided into three sub-types. For example, first, a D2D service involving both transmission and reception of signals on a D2D link may be given QCI = 14. Secondly, D2D service involving only transmission of signals on D2D link may be given QCI = 15. And thirdly, a D2D service involving only reception of signals on D2D link may be given QCI = 16.

This, or a similar, distinction of the at least one D2D service requested by the first UE 121 is useful, since the RAC in the RAN node 110 require information about the required radio resources of the radio communications network 100 in order to assess the admissibility of a requested D2D service by the first UE 121.

In some embodiments, the first UE 121 may also transmit additional information with the D2D service request. This additional information may comprise one or more of:
- an identity of the second UE 122, that is, the identity of the UE that the first UE 121 wants to communicate with. This may e.g. be a local ID based on the second UE's 122 transmitted discovery signal and/or the second UE's 122 global ID obtained from the second UE's 122 transmitted system information.
- a maximum transmit power level for the D2D communication with the second UE 122. This may be the maximum transmit power level that the first UE 121 wants to use for D2D discovery or D2D communication. If the first UE 121 requests a high transmit power level, then the RAC in the RAN node 110 may have a higher probability of rejection.
- a number or amount of radio resources for the D2D communication with the second UE 122. This may be the number or amount of radio resources, such as, e.g. PRBs, Resource Elements, REs, etc., that the first UE 121 wants to use for D2D discovery or D2D communication. If the first UE 121 requests a higher number of radio resources, then the RAC in the RAN node 110 may have a higher probability of rejection.
- one or more UE capabilities specific for the D2D communication with the second UE 122. A UE capability may, e.g. be whether the first UE 121 supports signal transmission on the DL radio resources and/or reception in the UL radio resources, the number of transmit and/or receive antennas of the first UE 121, the bandwidth which the first UE 121 may use for D2D operation, etc.
- one or more QoS service parameters for a D2D RB of the at least one requested D2D service. Examples of QoS service parameters are target packet transmission delays, BLock Error Rates, BLERs, Bit Error Rates, BERs, Packet Loss Rates, PLRs, etc. For example, a low delay/BER/PLR request by the first UE 121 may lead to a higher rejection probability by the RAC in the RAN node 110, since high QoS RBs typically require a higher amount of radio resources.
- a time duration for the D2D communication with the second UE 122, and
- an identity of a cell served by the RAN node 110 in the radio communications network 100.

In some embodiments, the first UE 121 may transmit the D2D service request as part of Non-Access Stratum, NAS, signalling with the first CN node 131.

### Action 301b

The first CN node 131 receives the D2D service request from the first UE 121. This means that the first CN node 131 receives a D2D service request comprising at least one D2D service type indicator indicating the at least one requested D2D service from the first UE 121. The first CN node 131 may be an Application Server, AS, or Policy Control and Resource Function, PCRF, node 131 in the radio communications network 100. In some embodiment, the first CN node 131 may also receive the additional information from the UE 121. In some embodiments, the first CN may receive the D2D service request as part of Non-Access Stratum, NAS, signalling with the first UE 121.

### Action 302

The first CN node 131 may determine a D2D RB. This means that the first CN node 131 determines at least one D2D RB for the at least one requested D2D service based on the at least one received D2D service type indicator.

In some embodiments, the first CN node 131 may determine the at least one D2D RB further based on subscription data associated with the at least one requested D2D service and/or the first UE 121. The subscription data may, for example, be whether or not the first UE 121 is entitled to request the specific D2D service identified by the D2D service type indicator, e.g. QCI. Also, the first CN node 131 may determine the at least one D2D RB further based on a network operator policy associated with the at least one requested D2D service and/or the first UE 121. The network operator policy may, for example, be whether or not the specific requested QoS is supported by the CN in the radio communications network or not. Furthermore, in some embodiments, the first CN node 131 may determine the at least one D2D RB further based on the additional information received from the first UE 121.

### Action 303a

The first CN node 131 transmits a first D2D RB setup request to a second CN network node 131. This means that the first CN node transmits a first D2D RB setup request for the determined at least one D2D RB to a second CN node 132 in the radio communications network comprising the at least one received D2D service type indicator. The second CN network node 132 may, for example, be a Mobility Management Entity, MME, responsible for the D2D RB setup and serving the first UE 121 in the CN of the radio communications network 100. According to one example, the first D2D RB setup request may be part of a "D2D bearer resource allocation request" command.

### Action 303b

The second CN node 132 receives the first D2D RB setup request for at least one D2D RB from the first CN node 131, wherein the D2D RB setup request comprises the at least one received D2D service type indicator.

### Action 304a

Based on the received first D2D RB setup request, the second CN node 132 transmits a second D2D RB setup request for the at least one D2D RB to a RAN node 110 serving the first UE 121 in the radio communications network 100, wherein the second D2D RB setup request comprises the at least one received D2D service type indicator. For example, the second CN node 132 may form a RB setup request that specifies whether a cellular RB, a D2D RB for D2D discovery, or a D2D RB for D2D communication has been requested. The RB setup request is then sent to the RAN node 110. According to one example, if the first D2D RB setup request is part of a "D2D bearer resource allocation request" command which is accepted by the second CN node 132, then the second D2D RB setup request may be at least a part of a dedicated E-RAB Setup Request command comprising e.g. an "Activate Dedicated EPS Bearer Context Request" command.

In some embodiments, the transmitted second D2D RB setup request may further comprise one or more of: information indicating whether the at least one requested D2D service require a D2D RB for D2D discovery or a D2D RB for D2D communication; information indicating a maximum transmit power level for the D2D communication with the second UE 122; information indicating a number or amount of radio resources for the D2D communication with the second UE 122; information indicating one or more QoS service parameters for a D2D RB of the at least one requested D2D service, such as, e.g. packet delay, packet drop rate, BLER, BER, etc.; information indicating a time duration for the D2D communication with the second UE 122; and an identity of a cell served by a RAN node 110 in the radio communications network 100. This means that the second D2D RB setup request message may comprise parameters that describe the physical, PHY, layer characteristics that are requested for this specific requested D2D RB.

### Action 304b

Here, the RAN node 110 receives the second D2D RB setup request comprising the at least one D2D service type indicator indicating the at least one requested D2D service from the second CN node 132. In some embodiments, the RAN node 110 may further receive additional information from the second CN node 132. The additional information may comprise one or more of: an identity of the second UE 122, a maximum transmit power level for the D2D communication with the second UE 122, a number or amount of radio resources for the D2D communication with the second UE 122, one or more UE capabilities specific for the D2D communication with the second UE 122, one or more QoS service parameters for a D2D RB of the required D2D service, a time duration for the D2D communication with the second UE 122, and an identity of a cell served by a RAN node 110 in the radio communications network 100.

### Action 305

After receiving the second D2D RB setup request, the RAN node 110 performs RAC for the requested D2D service. This means that the RAN node 110 determines whether or not there are sufficient radio resources available to support a D2D communication performed in accordance with the requested D2D service based on the at least one D2D service type indicator. This means that the RAN node 110 is able to perform an extended RAC, that is, a RAC whose output is not only to accept/reject cellular RBs, e.g. EPS RBs, as in legacy RACs, but also accept/reject D2D RBs.

This extended RAC of the RAN node 110 may, for example, take into account one or more of the following: the load on radio resources that are dedicated to cellular communication; the load on radio resources that are dedicated to D2D communication; the load on radio resources on which both cellular and D2D communication is allowed; traffic requirements, such as, e.g. in terms of bit rates and latencies; the amount of buffered data; computational resources of the RAN node 110, such as, e.g. baseband capacity utilization, available scheduling entities, etc.; system capacity, such as, e.g. a maximum number of D2D UEs and/or cellular UEs that may be handled by the RAN node 110 or in its cell; a maximum number of D2D/cellular RBs that may be handled by the RAN node 110 or in its cell; Transport Network, TN, load, such as, e.g. TN bandwidth capacity of TN interfaces, such as, e.g. an interface between the RAN node 110 and the second CN node 132; and hardware resources in RAN node 110, such as, e.g. available memory and/or processing modules/circuitry. The extended RAC of the RAN node 110 may consider the above loads on one or more of the UL/DL radio resources, such as, e.g. LTE network PRBs or frequency channels, time slots, channel codes, and also on other type of radio resources, such as, e.g. PDCCH CCEs, PUCCH SR and QCI users, SRS resources, etc.

In some embodiments, the at least one requested D2D service may be one or more of the service types mentioned in Action 301a. In some embodiments, in case additional information was received in Action 304b, the RAN node 110 may determine whether or not there is sufficient radio resources available to support a D2D communication performed in accordance with the at least one requested D2D service further based on the received additional information.

In some embodiments, the RAN node 110 may obtain one or more measurements from a group of measurements comprising: radio measurements, traffic related measurements, radio resource load or utilization measurements, and available hardware resource measurements. Examples of obtained radio measurements may comprise signal strength, such as, e.g. RSRP; or signal quality, such as, e.g. RSRQ, SINR, SNR, BER, BLER, etc. Examples of obtained traffic related measurements may comprise the buffer size at the RAN node 110, the buffer status at the first UE 121, the amount of data for retransmission, etc.

Examples of obtained radio resource load or utilization measurements may comprise the current, or mean, usage of physical resource blocks, or PRBs, such as, e.g. 30% percentage utilization of UL or DL RBs over the last second; the usage of transport network interface, the data packet loss rate on transport network interface, etc. As a further example, any load related measurement may, for example, be expressed, or quantified, as Low Load, Medium Load, High Load and Overload. In another example, any load related measurement may be expressed, or quantified, as a percentage, such as, e.g. <25%, between 25 and 50%, between 50 and 75% and more than 75% loaded.

Examples of obtained hardware resource measurements may comprise the current use and/or capacity of memory units, processing units, etc. These hardware resources may, for example, also be expressed, or quantified, as to be Low, Medium, High and Unavailable, or in percentages, such as, <25%, between 25 and 50%, between 50 and 75% and more than 75% used.

In some embodiments, this may be performed by performing one or more of the measurements in the RAN node 110. Alternatively, this may be performed by receiving one or more of the measurements from the first UE 121. This means that the obtained measurements may be performed by the RAN node 110, i.e. the RAN node 110 may measure on DL radio signals, and/or on UL radio signals, and/or on transmissions over transport network interfaces, such as, e.g. between the RAN node 110 and the second CN node 132, between RAN nodes, etc. The RAN node 110 may also determine amount of hardware resources available, such as, e.g. memory units, processing units, etc. It also means that the obtained measurements may be performed by a cellular UE or D2D UE, such as, the first UE 121, and reported to the RAN node 110.

Then, the RAN node 110 may determine whether or not there is sufficient radio resources available to support a D2D communication performed in accordance with the at least one requested D2D service further based on said one or more obtained measurements.

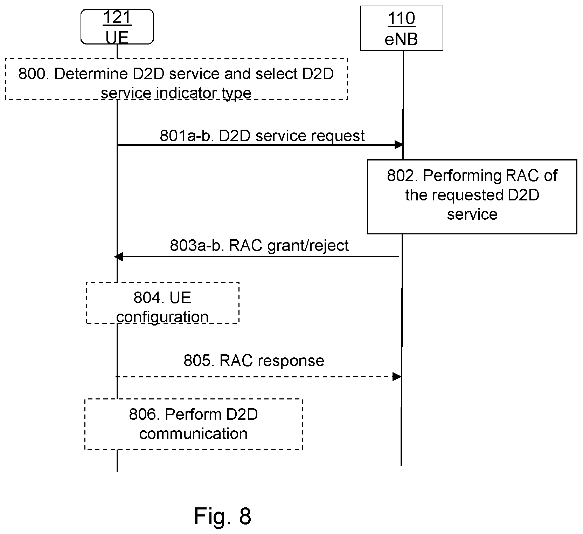

Described below are a few examples of the extended RAC, or RAC procedure, which may be performed by some embodiments of the RAN node 110. As described above, the extended RAC in the RAN node 110 uses as input a D2D service type indicator. In the examples below, the D2D service type indicator is signalled QCI information. This information may come either from the second CN node 132, as described above, or alternatively, from the first UE 121 directly, as described below with reference to Figures 8-10.

The operation of the RAC comprises the use of the received QCI parameter to decide which admission control algorithm that the RAC should employ. Furthermore, the RAN node 110 may continuously, or on regular basis, obtain one or plurality of measurements that may be used as a second set of input parameters to the RAC algorithms. The RAN node 110 may then check, e.g. based on both the QCI parameter and the obtained measurements, whether there are sufficient radio resources available for admitting the the first UE 121. The RAC algorithms further guarantees that the admission of the first UE 121 will not degrade the performance of the existing UEs in the radio communications network 100, such as, e.g. cellular UEs and already existing D2D UEs.

Once the appropriate RAC algorithm is selected, admission control is performed on the basis of the monitored radio resources taken into account as described above. The admission control admits the first UE 121provided that at least sufficient radio resources, e.g. RBs, are available for the first UE 121 depending upon the D2D service type according to the D2D service type indicator. For example, one D2D service type, i.e. QCI = 13, may require radio resources for both transmission and reception of radio signals for communicating with another D2D UE, i.e. the second UE 122. If the RAN node 110 cannot provide radio resources for reception and transmission of the signals, then the first UE 121 may not be admitted. In case of insufficient resources, the RAN node 110 may, instead of rejecting the admission of the first UE 121, may also offer the first UE 121 to accept a D2D service requiring another D2D service type with, for example, a lower QCI, such as, e.g. QCI = 11.

According to a first example, an extended RAC for a D2D service type requiring both cellular and D2D services, i.e. QCI = 10, is described; that is, the first UE 121 requesting a D2D service requiring at least one D2D RB for D2D communication with the second UE 122, wherein the first UE 121 is also configured with a cellular service requiring at least one cellular RB. Initially, the radio resource utilization in the radio communications network 100 may be checked by the RAN node 110. If the radio resource utilization is below a threshold, such as, e.g. a 30% usage of RBs, which means that there are radio resources available or the usage is low, the first UE 121 may be accepted for D2D or cellular services, and the choice of the communication mode may be performed by the RAN node 110 by using a mode selection algorithm. However, if the radio resource utilization is high, which means that unused radio resources may not be available, the non-GBRs RBs affected by the admission of new RBs may be selected. For those selected RBs, their QoS and stability may be checked by the RAN node 110, and if the QoS and stability are acceptable for new RBs, the D2D service request may be accepted for D2D services only. Otherwise, the D2D service request may be rejected by the RAN node 110 since stability and QoS in the current radio resource regime cannot be guaranteed.

According to a second example, an extended RAC for a D2D service type requiring D2D discovery services only, i.e. QCI = 11, is described; that is, the first UE 121 requesting a D2D service requiring D2D discovery resources to discover the second UE 122. Initially, the radio resource utilization in the radio communications network 100 may be checked by the RAN node 110. If the radio resource utilization is below a threshold, such as, e.g. a 30% usage of RBs, which means that there are radio resources available or the usage is low, the radio resource utilization on the peer discovery radio resources may be checked by the RAN node 110. Then, if the load on those peer discovery radio resources is low, or under a predefined or predetermined load threshold, the RAN node 110 may accept the request for D2D discovery only. Otherwise, the request may be rejected by the RAN node 110. Also, if the radio resource utilization is high, e.g. above 30% RB usage, which means that unused radio resources may not be available, the RAN node 110 may also reject the request for admission by the first UE 121.

According to a third example, an extended RAC for a D2D service type requiring D2D radio bearer services, i.e. QCI = 12, is described; that is, the first UE 121 requesting a D2D service requiring at least one D2D RB for D2D communication with the second UE 122. The RAC procedure is, in this case, very similar to the one described in the first example above, except that here, contrary to the first example above, the UE 121 is not configured with a cellular service requiring at least one cellular RB.

According to a fourth example, an extended RAC for a D2D service type requiring D2D service only i.e. without network assistance, i.e. QCI = 14, 15, or 16, is described.

These D2D service types do not require communication between the RAN node 110 and the first UE 121, or a supervisory radio link therein between, while the first UE 121 is involved in D2D communication. Therefore, in this case, the RAN node 110 may set a slightly higher lower threshold for admitting a UE requesting this D2D service type. For example, a UE requesting this D2D service type may be admitted by the RAN node 110, for example, only if the radio resource utilization is below a second predetermined threshold, such as, e.g. below 20% usage of RBs. This is because of the lack of the direct supervisory link, which means that the RAN node 110 will not be able to quickly or fully control UEs requesting this D2D service type once these UEs have been granted access to the radio resources. In some embodiments, the RAN node 110 may decide to admit the UEs requesting this D2D service type over certain time period, e.g. over the next 30 seconds or similar. In some embodiments, the RAN node 110 may also revert the admission of the UEs requesting this D2D service type, or limit their allocated radio resources, via sending out a broadcast message. This will be received by the UEs requesting this D2D service type even without any dedicated radio link between the RAN node 110 and the first UE 121.

### Action 306a

Based on the outcome of the RAC operation, i.e. the determination in Action 305, the RAN node 110 sends a RAC grant message or a RAC reject message to the first UE 121. This means that the RAN node 110 may transmit a RAC grant message for the requested D2D service to the first UE 121, when the RAN node 110 has determined that there is sufficient radio resources available to support a D2D communication performed in accordance with the at least one requested D2D service. The RAC grant message may comprise information that is needed by the first UE 121 for its internal configuration, such as, D2D bearer ID, radio configuration for D2D communications, etc. According to one example, in case the request D2D service is a D2D RB for D2D discovery, the first UE 121 may be provided by the RAN node 110 with information on the specific pool of radio resources that the first UE 121 may use as Peer Discovery Resources, PDR. Alternatively, in case the request D2D service is a D2D RB for D2D communication, the first UE 121 may receive information about the specific radio resources, such as, e.g. a PRB set, a maximum transmit power, a transport format, etc., that the first UE 121 may use in the D2D communication.

In some embodiments, the RAC grant message may be a "Activate Dedicated EPS Bearer Context Request" or a "Bearer Resource Allocation Reject" and being part of an RRCConnectionReconfiguration message.

Alternatively, the RAN node 110 may transmit a RAC reject message for the requested D2D service to the first UE 121 when determined that there is not sufficient radio resources available to support a D2D communication performed in accordance with the at least one requested D2D service. In some embodiments, the RAN node 110 may also transmit a RAC grant message for another D2D service than the requested D2D service to the first UE 121 when determined that there is not sufficient radio resources available to support a D2D communication performed in accordance with the at least one requested D2D service. This means that instead of rejecting the first UE 121 when finding that there is insufficient radio resources for the requested D2D service, the RAN node 110 may offer the first UE 121 a D2D service with a lower QoS level, e.g. a lower QCI level, in order to be admitted by the RAC in the RAN node 110.

In some embodiments, the RAN node 110 may further transmit a D2D RB setup reject to the second CN node 132, when the RAC was unsuccessful in the RAN node 110 and the D2D bearer setup is rejected by the RAN node 110.

### Action 306b

Here, the first UE 121 receives a RAC grant message or a RAC reject message in response to the transmitted D2D service request. Here, the RAC grant message or the RAC reject message is received from the RAN node 110 serving the first UE 121.

### Action 307

The first UE 121 may here configure a D2D bearer in accordance with the received RAC grant message or a RAC reject message from the RAN node 110.

### Action 308

The first UE 121 may, in this optional action, transmit a RAC response back to the RAN node 110 in response to the received RAC grant message or RAC reject message in Action 306b. This may acknowledge the RAC grant message or the RAC reject message to the RAN node 110.

### Action 309

The first UE 121 may here, when or if a RAC grant message is received in Action 306b, perform D2D communication in accordance with the at least one D2D service granted in the RAC grant message.

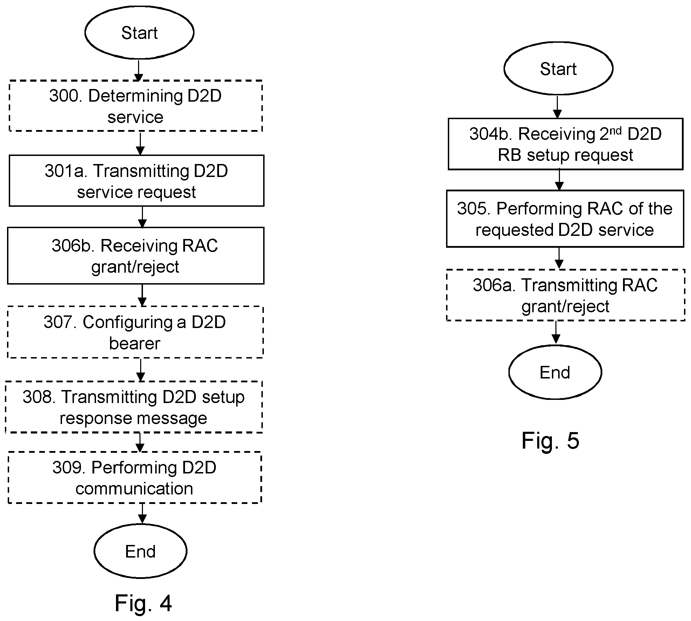

It should also be noted that the actions 300, 301a, 306b, 307, 308, 309, i.e. relating to the first UE 121, described above with reference to the schematic signalling diagram depicted in Figure 3 also relates to the flow diagram of Figure 4. **Figure 4** depicts embodiments of a method performed by the first UE 121 for enabling RAC of at least one D2D service for a D2D communication with a second UE 122 in a radio communications network 100.

It should further be noted that the actions 304b, 305, 306a, i.e. relating to the RAN node 110, described above with reference to the schematic signalling diagram depicted in Figure 3 also relates to the flow diagram of Figure 5. **Figure 5** depicts embodiments of a method performed by the RAN node 110 for performing RAC of at least one D2D service for a D2D communication with a second UE 122 in a radio communications network 100.

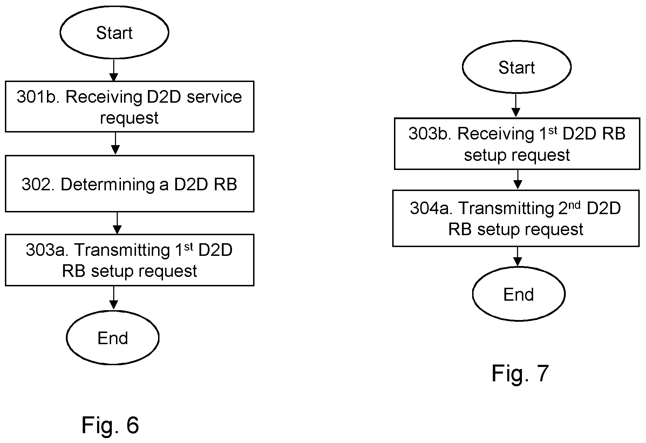

Furthermore, it should also be noted that the actions 301b, 302, 303a, and the actions 303b, 304a, i.e. relating to the first and second CN node 131, 132 respectively, described above with reference to the schematic signalling diagram depicted in Figure 3 also relates to the flow diagrams of Figure 6-7. **Figures 6-7** depicts embodiments of methods performed by the first CN node 131, and the second CN node 132, respectively, for enabling RAC of at least one D2D service requested by a first UE 121 for a D2D communication with the second UE 122 in a radio communications network 100.

Example of embodiments of methods performed by the first UE 121 and the RAN node 110 will now be described with reference to the schematic signalling diagram depicted in Figure 8. **Figure 8** is a simplified illustrated example of exemplary actions or operations which may be taken by the involved nodes and user equipment. The embodiments described below are similar to the embodiments described above, except in that no core network nodes, e.g. the first or second CN node 131, 132, are involved in the signalling.

### Action 800

This optional action is identical to action 300 described with reference to Figure 3 above.

### Action 801a

Here, the first UE 121 transmits a D2D service request. This means that the first UE 121 transmits a D2D service request comprising at least one D2D service type indicator indicating the at least one D2D service to a first network node in the radio communications network 100. In this case, the first network node is the RAN node 110 in the radio communications network 100, e.g.an eNB. As relating to the first UE 121, this action may be identical to action 301a described with reference to Figure 3 above, except that the first UE 121 in this case transmits the D2D service request to the RAN node 110. Also, the D2D service request may be transmitted as part of Access Stratum signalling, such as, e.g. Radio Resource Control, RRC, signalling.

### Action 801b

The RAN node 110 receives the D2D service request comprising at least one D2D service type indicator indicating the at least one requested D2D service from the first UE 121. As relating to the RAN node 110, this action may be identical to action 304b described with reference to Figure 3 above, except that the RAN node 110 in this case receives the D2D service request from the first UE 121. The D2D service request may be received as part of Access Stratum signalling, such as, e.g. by means of RRC signalling.

### Action 802

After receiving the D2D service request, the RAN node 110 performs the Random Access Control (RAC) operation for the requested D2D service. This means that the RAN node 110 determines whether or not there is sufficient radio resources available to support a D2D communication performed in accordance with the requested D2D service based on the at least one D2D service type indicator. As relating to the RAN node 110, this action is identical to action 305 described with reference to Figure 3 above.

### Action 803a

Based on the outcome of the RAC operation, i.e. the determination in action 802 , the RAN node 110 sends a RAC grant message or a RAC reject message to the first UE 121. As relating to the RAN node 110, this action is identical to Action 306a described with reference to Figure 3 above.

### Action 803b

Here, the first UE 121 receives a RAC grant message or a RAC reject message in response to the transmitted D2D service request.

### Action 804

The first UE 121 may configure a D2D bearer in accordance with the received RAC grant message or a RAC reject message from the RAN node 110.

### Action 805

The first UE 121 may, in this optional action, transmit a RAC response back to the RAN node 110 in response to the received RAC grant message or RAC reject message message in Action 803a. This may acknowledge the RAC grant message or a RAC reject message to the RAN node 110.

### Action 806

The first UE 121 may, when or if a RAC grant message is received in Action 803a, perform D2D communication in accordance with the at least one D2D service granted in the RAC grant message.

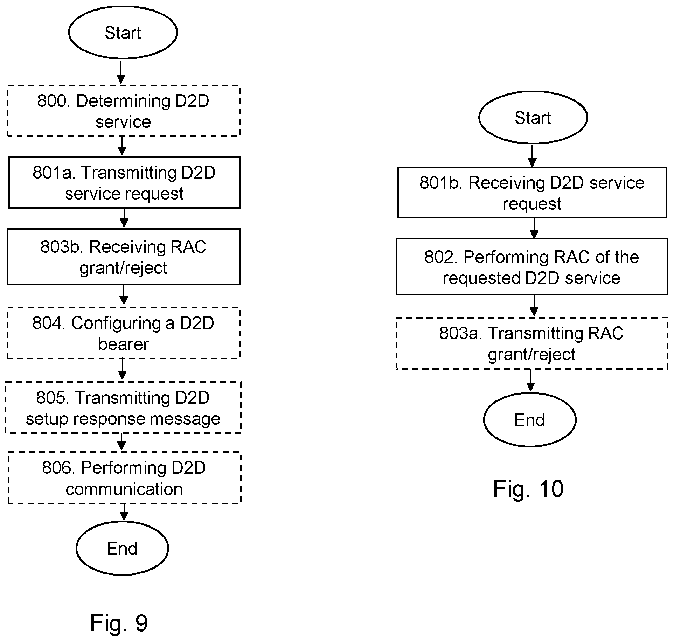

It should also be noted that the actions 800, 801a, 803b, 804, 805, 806, i.e. relating to the first UE 121, described above with reference to the schematic signalling diagram depicted in Figure 8 also relates to the flow diagram of **Figure 9**. Figure 9 depicts embodiments of a method performed by the first UE 121 for enabling RAC of at least one D2D service for a D2D communication with a second UE 122 in a radio communications network 100.

Furthermore, it should also be noted that the actions 801b, 802, 803a, i.e. relating to the RAN node 110, described above with reference to the schematic signalling diagram depicted in Figure 8 also relates to the flow diagram of **Figure 10**. Figure 10 depicts embodiments of methods performed by the RAN node 110 for performing RAC of at least one D2D service requested by a first UE 121 for a D2D communication with the second UE 122 in a radio communications network 100.

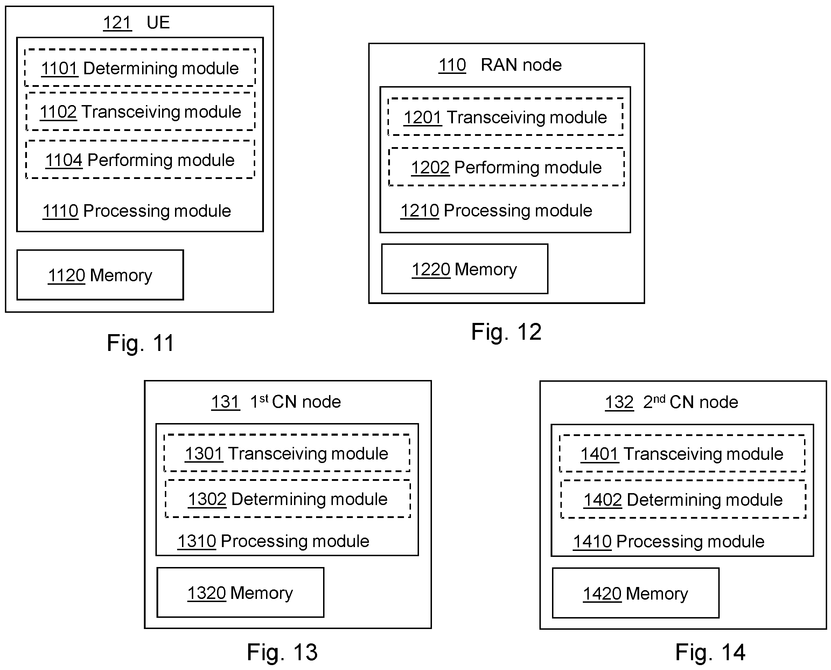

To perform the method actions in the first UE 121 for enabling RAC of at least one D2D service for a D2D communication with a second UE 122 in a radio communications network 100, the first UE 121 may comprise the following arrangement depicted in Figure 11. **Figure 11** shows a schematic block diagram of embodiments of the first UE 121. In some embodiments, the first UE 121 may comprise a **determining module 1101**, a **transceiving module 1102**, a **configuring module 1103**, and a **performing module 1104.** In some embodiments, the first UE 121 may comprise a **processing circuitry 1110**, which may also be referred to as processing module, processing unit or processor. The processing circuitry 1110 may comprise one or more of the determining module 1101, transceiving module 1102, configuring module 1103, and performing module 1104, and/or perform the function thereof described below.

In some embodiments, the first UE 121 or the determining module 1101 may be configured to determine the at least one D2D service to be used for the D2D communication with the second UE 122, and select at least one D2D service type indicator indicating the at least one determined D2D service.

The first UE 121 is configured to, or comprises the transceiving module 1102 being configured to transmit a D2D service request comprising at least one D2D service type indicator indicating the at least one D2D service to a first network node 110, 131 in the radio communications network 100. Also, first UE 121 is configured to, or comprises the transceiving module 1102 being configured to receive a RAC grant message or a RAC reject message in response to the transmitted D2D service request.

In some embodiments, the first UE 121 or the performing module 1103 may be configured to, perform D2D communication in accordance with the at least one D2D service granted in the RAC grant message when a RAC grant message is received. In some embodiments, the first UE 121 or the performing module 1103 may be configured to configure a D2D bearer in accordance with the received RAC grant message or a RAC reject message.

In some embodiments, the D2D service type indicator is a Quality of Service, QoS, class identifier, QCI. In some embodiments, the at least one requested D2D service is one or more of the following service types: a D2D service requiring at least one D2D RB for D2D communication with the second UE 122, wherein the first UE 121 is also configured with a cellular service requiring at least one cellular RB; a D2D service requiring D2D discovery resources to discover the second UE 122; a D2D service requiring at least one D2D RB for D2D communication with the second UE 122; a D2D service requiring D2D discovery resources for receiving discovery signals from the second UE 122; and a D2D service requiring at least one D2D RB for D2D communication with the second UE 122 without network-assisted control signalling.

In some embodiments, the first UE 121 may be configured to, or comprises the transceiving module 1102 being configured to further transmit additional information to the first network node 110, 131 in the radio communications network 100. The additional information may comprise one or more of: an identity of the second UE 122; a maximum transmit power level for the D2D communication with the second UE 122; a number or amount of radio resources for the D2D communication with the second UE 122; one or more UE capabilities specific for the D2D communication with the second UE 122; one or more QoS service parameters for a D2D RB of the at least one requested D2D service; a time duration for the D2D communication with the second UE 122, and an identity of a cell served by a RAN node 110 in the radio communications network 100.

In some embodiments, the first network node 110, 131 is a RAN node 110 or a first CN node 131 in the radio communications network 100.

The embodiments for enabling RAC of at least one D2D service for a D2D communication with a second UE 122 may be implemented through one or more processors, such as, e.g. the processing circuitry 1110 in the first UE 121 depicted in Figure 11, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 1110 in the first UE 121. The computer program code may e.g. be provided as pure program code in the first UE 121 or on a server and downloaded to the first UE 121. The carrier may be one of an electronic signal, optical signal, radio signal, or computer readable storage medium, such as, e.g. electronic memories like a RAM, a ROM, a Flash memory, a magnetic tape, a CD-ROM, a DVD, a Blueray disc, etc.

The first UE 121 may further comprise a **memory 1120**, which may be referred to or comprise one or more memory modules or units. The memory 1120 may be arranged to be used to store executable instructions and data, such as, e.g. the D2D service type indicator, the additional information, etc., to perform the methods described herein when being executed in the first UE 121. Those skilled in the art will also appreciate that the processing circuitry 1110 and the memory 1120 described above may refer to a combination of analog and digital circuits, and/or one or more processors configured with software and/or firmware, e.g. stored in the memory 1120, that when executed by the one or more processors such as the processing circuitry 1110 perform the method as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

From the above it may be seen that some embodiments may comprise a computer program, comprising instructions which, when executed on at least one processor, e.g. the processing circuitry or module 1110, cause the at least one processor to carry out the method for enabling RAC of at least one D2D service for a D2D communication with a second UE 122. Also, some embodiments may, as described above, further comprise a carrier containing said computer program, wherein the carrier is one of an electronic signal, optical signal, radio signal, or computer readable storage medium.

To perform the method actions for performing RAC of at least one D2D service requested by a first UE 121 for a D2D communication with a second UE 122 in a radio communications network 100, the RAN node 110 may comprise the following arrangement depicted in Figure 12. **Figure 12** shows a schematic block diagram of embodiments of the network node 110. In some embodiments, the network node 110 may comprise a **transceiving module 1201**, and a **performing module 1202.** In some embodiments, the network node 110 may comprise a **processing circuitry 1210**, which may also be referred to as processing module, processing unit or processor. The processing circuitry 1210 may comprise one or more of the transceiving module 1201 and the performing module 1202, and/or perform the function thereof described below.

The RAN node 110 is configured to, or comprises the transceiving module 1201 being configured to, receive a D2D service request or a second D2D RB setup request comprising at least one D2D service type indicator indicating the at least one requested D2D service. Also, the RAN node 110 is configured to, or comprises the performing module 1202 being configured to, perform RAC of the requested D2D service by determining whether or not there is sufficient radio resources available to support a D2D communication performed in accordance with the requested D2D service based on the at least one D2D service type indicator.

Furthermore, the RAN node 110 may also be configured to, or comprises the transceiving module 1201 being configured to, transmit a RAC grant message for the requested D2D service to the first UE 121 when determined that there is sufficient radio resources available to support a D2D communication performed in accordance with the at least one requested D2D service. Also, the RAN node 110 may be configured to, or comprises the transceiving module 1201 being configured to, transmit a RAC reject message for the requested D2D service to the first UE 121 when determined that there is not sufficient radio resources available to support a D2D communication performed in accordance with the at least one requested D2D service.

In some embodiments, the RAN node 110 may be configured to, or comprises the transceiving module 1201 being configured to, transmit a RAC grant message for another D2D service than the requested D2D service to the first UE 121 when determined that there is not sufficient radio resources available to support a D2D communication performed in accordance with the at least one requested D2D service.

In some embodiments, the D2D service type indicator is a Quality of Service, QoS, class identifier, QCI. In some embodiments, the at least one requested D2D service is one or more of the following service types: a D2D service requiring at least one D2D RB for D2D communication with the second UE 122, wherein the first UE 121 is also configured with a cellular service requiring at least one cellular RB; a D2D service requiring D2D discovery bearer to discover the second UE 122; a D2D service requiring at least one D2D RB for D2D communication with the second UE 122; a D2D service requiring D2D discovery bearer for receiving discovery signals from the second UE 122; a D2D service requiring at least one D2D RB for D2D communication with the second UE 122 without network-assisted control signalling.

In some embodiments, the RAN node 110 may be configured to, or comprises the transceiving module 1201 being configured to, receive additional information. The additional information may comprise one or more of: an identity of the second UE 122; a maximum transmit power level for the D2D communication with the second UE 122; a number or amount of radio resources for the D2D communication with the second UE 122; one or more UE capabilities specific for the D2D communication with the second UE 122; one or more QoS service parameters for a D2D RB of the required D2D service; a time duration for the D2D communication with the second UE 122; and an identity of a cell served by a RAN node 110 in the radio communications network 100. In this case, the RAN node 110 may be configured to, or comprises the performing module 1202 being configured to, perform RAC of the requested D2D service by determining whether or not there is sufficient radio resources available to support a D2D communication performed in accordance with the at least one requested D2D service further based on said additional information.

Also, in some embodiments, the RAN node 110 may be configured to, or comprises the transceiving module 1201 being configured to, receive the second D2D RB setup request and/or the additional information from a first CN node 131 in the radio communications network 100. In some embodiments, the RAN node 110 may be configured to, or comprises the transceiving module 1201 being configured to, receive the D2D service request and/or the additional information from the first UE 121.

In some embodiments, the RAN node 110 may also be configured to, or comprises the performing module 1202 being configured to obtain one or more measurements from a group of measurements comprising: radio measurements, traffic related measurements, radio resource load or utilization measurements, and available hardware resource measurements. In this case, the RAN node 110 may also be configured to, or comprises the performing module 1202 being configured to, perform RAC of the requested D2D service by determining whether or not there is sufficient radio resources available to support a D2D communication performed in accordance with the at least one requested D2D service based on said one or more obtained measurements. In some embodiments, the one or more measurements may be obtained by performing one or more of the measurements in the network node 110, and/or receiving one or more of the measurements from the first UE 121.

To perform the method actions for enabling RAC of at least one D2D service requested by a first UE 121 for a D2D communication with a second UE 122 in a radio communications network 100, the first CN node 131 may comprise the following arrangement depicted in Figure 13. **Figure 13** shows a schematic block diagram of embodiments of the first CN node 131. In some embodiments, the first CN node 110 may comprise a **transceiving module 1301**, and a **determining module 1302**. In some embodiments, the CN node 131 may comprise a **processing circuitry 1310**, which may also be referred to as processing module, processing unit or processor. The processing circuitry 1310 may comprise one or more of the transceiving module 1301 and the determining module 1302, and/or perform the function thereof described below.

The first CN node 131 is configured to, or comprises the transceiving module 1301 being configured to receive a D2D service request comprising at least one D2D service type indicator indicating the at least one requested D2D service from the first UE 121. Also, the first CN node 131 is configured to, or comprises the determining module 1302 being configured to, determine at least one D2D RB for the at least one requested D2D service based on the at least one received D2D service type indicator. Also, the first CN node 131 is configured to, or comprises the transceiving module 1301 being configured to, transmit a RB setup request for the determined at least one D2D RB to a second CN node 132 in the radio communications network 100 comprising the at least one D2D service type indicator.

Furthermore, the first CN node 131 may be configured to, or comprises the determining module 1302 being configured to determine the at least one RB further based on subscription data associated with the at least one requested D2D service and/or the first UE 121, and/or a network operator policy associated with the at least one requested D2D service and/or the first UE 121.

In some embodiments, the first CN node 131 may also be configured to, or comprises the transceiving module 1301 being configured to, receive additional information from the first UE 121. The additional information may comprise one or more of: an identity of the second UE 122, a maximum transmit power level for the D2D communication with the second UE 122, a number or amount of radio resources for the D2D communication with the second UE 122, one or more UE capabilities specific for the D2D communication with the second UE 122, one or more QoS service parameters for a D2D RB of the at least one requested D2D service, a time duration for the D2D communication with the second UE 122, and an identity of a cell served by a RAN node 110 in the radio communications network 100. In this case, the first CN node 131 may be configured to, or comprises the determining module 1302 being configured to, determine the at least one RB further based on the received additional information.

In some embodiments, the first CN node 131 may also be configured to, or comprises the transceiving module 1301 being configured to, receive the D2D service request and/or additional information by performing Non-Access Stratum, NAS, signalling with the first UE 121. In some embodiments, the first CN node may be an Application Server, AS, or Policy Control and Resource Function, PCRF, node 131 in the radio communications network 100. In some embodiments, the second CN node may be a Mobility Management Entity, MME.

To perform the method actions for enabling RAC of at least one D2D service requested by a first UE 121 for a D2D communication with a second UE 122 in a radio communications network 100, the second CN node 132 may comprise the following arrangement depicted in Figure 14. **Figure 14** shows a schematic block diagram of embodiments of the second CN node 132. In some embodiments, the CN node 132 may comprise a **transceiving module 1401**, and a **determining module 1402.** In some embodiments, the network node 110 may comprise a **processing circuitry 1410**, which may also be referred to as processing module, processing unit or processor. The processing circuitry 1410 may comprise one or more of the transceiving module 1401 and the determining module 1402, and/or perform the function thereof described below.

The second CN node 132 is configured to, or comprises the transceiving module 1401 being configured to, receive a first D2D RB setup request for at least one D2D RB from a first CN node 131 in the radio communications network 100 comprising the at least one D2D service type indicator. Also, the second CN node 132 is configured to, or comprises the transceiving module 1401 being configured to, transmit a second D2D RB setup request for the at least one D2D RB to a RAN node 110 serving the first UE 121 in the radio communications network 100 comprising the at least one D2D service type indicator.

Furthermore, the second CN node 132 may be configured to, or comprises the determining module 1402 being configured to, determine additional information. The additional information may comprises one or more of: information indicating whether the at least one requested D2D service require a D2D RB or a D2D discovery bearer; information indicating a maximum transmit power level for the D2D communication with the second UE 122; information indicating a number or amount of radio resources for the D2D communication with the second UE 122; information indicating one or more QoS service parameters for a D2D RB of the at least one requested D2D service; information indicating a time duration for the D2D communication with the second UE 122; and an identity of a cell served by a RAN node 110 in the radio communications network 100. In this case, the second CN node 132 may be configured to, or comprises the transceiving module 1401 being configured to, transmit the second D2D RB setup request comprising the additional information.

The embodiments for performing/enabling RAC of at least one D2D service requested by a first UE 121 for a D2D communication with a second UE 122 may be implemented through one or more processors, such as, e.g. the processing circuitry 1210 in the RAN node 110 depicted in Figure 12, the processing circuitry 1310 in the first CN node 131 depicted in Figure 13 and the processing circuitry 1410 in the second CN node 132 depicted in Figure 14, together with computer program code for performing the functions and actions of the embodiments herein. The program codes mentioned above may also be provided as computer program products, for instance in the form of data carriers carrying computer program code or code means for performing the embodiments herein when being loaded into the respective processing circuitry in the respective nodes. The computer program codes may e.g. be provided as pure program code in the respective node or on a server and downloaded to the respective nodes. The carriers may be one of an electronic signal, optical signal, radio signal, or computer readable storage medium, such as, e.g. electronic memories like a RAM, a ROM, a Flash memory, a magnetic tape, a CD-ROM, a DVD, a Blueray disc, etc.

Each of the respective nodes 110, 131, 132 may further comprise a **memory 1220**, **1131**, **1420**, respectively, which may be referred to or comprise one or more memory modules or units. The memory 1220, 1131, 1420 may be arranged to be used to store executable instructions and data to perform the methods described herein when being executed in the respective node. Those skilled in the art will also appreciate that the processing circuitry 1210, 1310,1410 and their respective memory 1220, 1131,1420 described above may refer to a combination of analog and digital circuits, and/or one or more processors configured with software and/or firmware, e.g. stored in the memory 1220, 1131,1420, that when executed by the one or more processors such as the corresponding processing circuitry 1210, 1310,1410 perform the method as described in the embodiments above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

From the above it may be seen that some embodiments may comprise a computer program, comprising instructions which, when executed on at least one processor, e.g. the processing circuitry or module 1210, 1310, 1410, cause the at least one processor to carry out the method for enabling RAC of at least one D2D service requested by a first UE 121 for a D2D communication with a second UE 122. Also, some embodiments may, as described above, further comprise a carrier containing said computer program, wherein the carrier is one of an electronic signal, optical signal, radio signal, or computer readable storage medium.

Furthermore, it should be noted that although the embodiments described herein are described for a D2D operation in an LTE radio communications network, or more specifically in an E-UTRAN system, these embodiments should not be considered limited to E-UTRAN. Also, the embodiments described herein may be described for a D2D operation in a single carrier frequency, but should be considered applicable to each carrier frequency involved in multi-carrier or carrier aggregation, CA, in case D2D operation is performed using CA.

The terminology used in the detailed description of the particular embodiments illustrated in the accompanying drawings is not intended to be limiting of the described UE, RAN node, first and second CN nodes or methods therein, which instead should be construed in view of the enclosed claims.

As used herein, the term "and/or" comprises any and all combinations of one or more of the associated listed items.

Further, as used herein, the common abbreviation "e.g.", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation. The common abbreviation "etc.", which derives from the Latin expression "et cetera" meaning "and other things" or "and so on" may have been used herein to indicate that further features, similar to the ones that have just been enumerated, exist.

As used herein, the singular forms "a", "an" and "the" are intended to comprise also the plural forms as well, unless expressly stated otherwise. It will be further understood that the terms "includes," "comprises," "including" and/or "comprising," when used in this specification, specify the presence of stated features, actions, integers, steps, operations, elements, and/or components, but do not preclude the presence or addition of one or more other features, actions, integers, steps, operations, elements, components, and/or groups thereof.

Unless otherwise defined, all terms comprising technical and scientific terms used herein have the same meaning as commonly understood by one of ordinary skill in the art to which the described embodiments belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The embodiments herein are not limited to the above described preferred embodiments. Various alternatives, modifications and equivalents may be used. Therefore, the above embodiments should not be construed as limiting.

### Abbreviations

- BS: Base Station
- QCI: Channel Quality Information
- DL: Downlink
- D2D: Device-to-Device
- eNB: Enhanced Node B
- EPS: Evolved Packet System
- GBR: Guaranteed Bit Rate
- HeNB: Home Evolved Node-B
- LEE: Laptop Embedded Equipped
- LME: Laptop Mounted Equipped
- LTE: Long Term Evolution
- MME: Mobility Management Entity
- MTC: Machine Type Communication
- M2M: Machine-to-Machine
- PDR: Peer Discovery Resources
- PDCCH: Physical Downlink Control Channel
- PRB: Physical Resource Block
- PUCCH: Physical Uplink Control Channel
- QoS: Quality of Service
- RAN: Radio Access Network
- RAC: Radio Admission Control
- RB: Radio Bearer
- RRC: Radio Resource Control
- RRM: Radio Resource Management
- SAE: System Architecture Evolution
- SE: Scheduling Entity
- SR: Scheduling Request
- SRS: Sounding Reference Signals
- TN: Transport Network
- TTI: Transmission Time Interval
- UE: User Equipment
- UL: Uplink
- USB: Universal Serial Bus

## Claims

1. A method performed by a first User Equipment, UE (121), for enabling Radio Admission Control, RAC, of at least one Device-to-Device, D2D, service for a D2D communication with a second UE (122) in a radio communications network (100), the method comprising
*transmitting* (301a, 801a) a D2D service request comprising at least one D2D service type indicator indicating the at least one D2D service to a first network node (110, 131) in the radio communications network (100), and
*receiving* (306b, 803b) a RAC grant message in response to the transmitted D2D service request, wherein
the RAC grant message is for another D2D service than the requested D2D service to the first UE (121) when there is not sufficient radio resources available to support a D2D communication performed in accordance with the at least one requested D2D.

2. The method according to claim 1, further comprising, when a RAC grant message is received, *performing* (309, 806) D2D communication in accordance with the at least one D2D service granted in the RAC grant message.

3. The method according to claim 1 or 2, further comprising
*determining* (300, 800) the at least one D2D service to be used for the D2D communication with the second UE (122) and selecting at least one D2D service type indicator indicating the at least one determined D2D service.

4. The method according to any of claims 1-3, wherein the D2D service type indicator is a Quality of Service, QoS, class identifier, QCI.

5. The method according to any of claims 1-4, wherein the at least one requested D2D service is one or more of the following service types:
- a D2D service requiring at least one D2D radio bearer for D2D communication with the second UE (122), wherein the first UE 121 is also configured with a cellular service requiring at least one cellular radio bearer;
- a D2D service requiring D2D discovery resources to discover the second UE (122),
- a D2D service requiring at least one D2D radio bearer for D2D communication with the second UE (122),
- a D2D service requiring D2D discovery resources for receiving discovery signals from the second UE (122), and
- a D2D service requiring at least one D2D radio bearer for D2D communication with the second UE (122) without network-assisted control signalling.

6. The method according to any of claims 1-5, wherein the *transmitting* (301a, 801a) further comprises transmitting additional information, wherein said additional information comprise one or more of:
- an identity of the second UE (122);
- a maximum transmit power level for the D2D communication with the second UE (122);
- a number or amount of radio resources for the D2D communication with the second UE (122);
- one or more UE capabilities specific for the D2D communication with the second UE (122);
- one or more QoS service parameters for a D2D radio bearer of the at least one requested D2D service;
- a time duration for the D2D communication with the second UE (122), and
- an identity of a cell served by a Radio Access Network, RAN, node (110) in the radio communications network (100).

7. A first User Equipment, UE (121), for enabling Radio Admission Control, RAC, of at least one Device-to-Device, D2D, service for a D2D communication with a second UE (122) in a radio communications network (100),
the first UE (121) being configured to transmit a D2D service request comprising at least one D2D service type indicator indicating the at least one D2D service to a first network node (110, 131) in the radio communications network (100), and receive a RAC grant message in response to the transmitted D2D service request, wherein
the RAC grant message is for another D2D service than the requested D2D service to the first UE (121) when there is not sufficient radio resources available to support a D2D communication performed in accordance with the at least one requested D2D.

8. The first UE (121) according to claim 7, further configured to perform D2D communication in accordance with the at least one D2D service granted in the RAC grant message when a RAC grant message is received.

9. The first UE (121) according to claim 7 or 8, further configured to determine the at least one D2D service to be used for the D2D communication with the second UE (122), and selecting at least one D2D service type indicator indicating the at least one determined D2D service.

10. The first UE (121) according to any of claims 7-9, wherein the D2D service type indicator is a Quality of Service, QoS, class identifier, QCI.

11. The first UE (121) according to any of claims 7-10, wherein the at least one requested D2D service is one or more of the following service types:
- a D2D service requiring at least one D2D radio bearer for D2D communication with the second UE (122), wherein the first UE 121 is also configured with a cellular service requiring at least one cellular radio bearer;
- a D2D service requiring D2D discovery resources to discover the second UE (122),
- a D2D service requiring at least one D2D radio bearer for D2D communication with the second UE (122),
- a D2D service requiring D2D discovery resources for receiving discovery signals from the second UE (122), and
- a D2D service requiring at least one D2D radio bearer for D2D communication with the second UE (122) without network-assisted control signalling.

12. The first UE (121) according to any of claims 7-11, further configured to transmit additional information to the first network node (110, 131) in the radio communications network (100), wherein said additional information comprise one or more of:
- an identity of the second UE (122);
- a maximum transmit power level for the D2D communication with the second UE (122);
- a number or amount of radio resources for the D2D communication with the second UE (122);
- one or more UE capabilities specific for the D2D communication with the second UE (122);
- one or more QoS service parameters for a D2D radio bearer of the at least one requested D2D service;
- a time duration for the D2D communication with the second UE (122), and
- an identity of a cell served by a Radio Access Network, RAN, node (110) in the radio communications network (100).

13. A method performed by a Radio Access Network, RAN, node (110) for performing Radio Admission Control, RAC, of at least one Device-to Device, D2D, service requested by a first User Equipment, UE (121), for a D2D communication with a second UE (122) in a radio communications network (100), the method comprising
*receiving* (304b, 801b) a D2D service request or a D2D radio bearer setup request for at least one D2D radio bearer comprising at least one D2D service type indicator indicating the at least one requested D2D service;
*performing* (305, 802) RAC of the requested D2D service by determining whether or not there is sufficient radio resources available to support a D2D communication performed in accordance with the requested D2D service based on the at least one D2D service type indicator; and
*transmitting* (306, 803) a RAC grant message for another D2D service than the requested D2D service to the first UE (121) when determined that there is not sufficient radio resources available to support a D2D communication performed in accordance with the at least one requested D2D service.

14. The method according to claim 13, further comprising
*transmitting* (306a, 803a) a RAC grant message for the requested D2D service to the first UE (121) when determined that there is sufficient radio resources available to support a D2D communication performed in accordance with the at least one requested D2D service.

15. The method according to claim 13, further comprising
*transmitting* (306a, 803a) a RAC reject message for the requested D2D service to the first UE (121) when determined that there is not sufficient radio resources available to support a D2D communication performed in accordance with the at least one requested D2D service.

16. The method according to any of claims 13-15, wherein the D2D service type indicator is a Quality of Service, QoS, class identifier, QCI.

17. The method according to any of claims 13-16, wherein the at least one requested D2D service is one or more of the following service types:
- a D2D service requiring at least one D2D radio bearer for D2D communication with the second UE (122), wherein the first UE 121 is also configured with a cellular service requiring at least one cellular radio bearer;
- a D2D service requiring D2D discovery bearer to discover the second UE (122),
- a D2D service requiring at least one D2D radio bearer for D2D communication with the second UE (122),
- a D2D service requiring D2D discovery bearer for receiving discovery signals from the second UE (122), and
- a D2D service requiring at least one D2D radio bearer for D2D communication with the second UE (122) without network-assisted control signalling.

18. A Radio Access Network, RAN, node (110) for performing Radio Admission Control, RAC, of at least one Device-to Device, D2D, service requested by a first User Equipment, UE (121), for a D2D communication with a second UE (122) in a radio communications network (100),
the RAN node (110) being configured to receive a D2D service request or a D2D radio bearer setup request for the at least one D2D radio bearer comprising at least one D2D service type indicator indicating the at least one requested D2D service, and perform RAC of the requested D2D service by determining whether or not there is sufficient radio resources available to support a D2D communication performed in accordance with the requested D2D service based on the at least one D2D service type indicator, and
the RAN node (110) is further configured to transmit a RAC grant message for another D2D service than the requested D2D service to the first UE (121) when determined that there is not sufficient radio resources available to support a D2D communication performed in accordance with the at least one requested D2D service.

## Patentansprüche

1. In einer ersten Benutzereinrichtung, UE, (121) ausgeführtes Verfahren zum Ermöglichen einer Funkzugriffssteuerung, RAC, von mindestens einem Vorrichtung-zu-Vorrichtung-Dienst (D2D-Dienst) für eine D2D-Kommunikation mit einer zweiten UE (122) in einem Funkkommunikationsnetz (100), wobei das Verfahren Folgendes umfasst:
*Übertragen* (301a, 801a) einer D2D-Dienstanforderung, die mindestens eine D2D-Diensttyp-Kennung umfasst, die den mindestens einen D2D-Dienst angibt, an einen ersten Netzknoten (110, 131) in dem Funkkommunikationsnetz (100), und
*Empfangen* (306b, 803b) einer RAC-Gewährungsnachricht als Reaktion auf die übertragene D2D-Dienstanforderung, wobei
die RAC-Gewährungsnachricht für einen anderen D2D-Dienst als den angeforderten D2D-Dienst für die erste UE (121) ist, wenn nicht genügend Funkressourcen verfügbar sind, um eine D2D-Kommunikation zu unterstützen, die gemäß des mindestens einen angeforderten D2D durchgeführt wird.

2. Verfahren nach Anspruch 1, ferner umfassend, wenn eine RAC-Gewährungsnachricht empfangen wird, das *Durchführen* (309, 806) einer D2D-Kommunikation gemäß dem mindestens einen D2D-Dienst, der in der RAC-Gewährungsnachricht gewährt wird.

3. Verfahren nach Anspruch 1 oder 2, ferner umfassend *Bestimmen* (300, 800) des mindestens einen D2D-Dienstes, der für die D2D-Kommunikation mit der zweiten UE (122) verwendet werden soll, und Auswählen mindestens einer D2D-Diensttyp-Kennung, die den mindestens einen bestimmten D2D-Dienst anzeigt.

4. Verfahren nach einem der Ansprüche 1 bis 3, wobei die D2D-Diensttyp-Kennung eine Dienstqualitäts-Klassenkennung, QoS, QCI, ist.

5. Verfahren nach einem der Ansprüche 1 bis 4, wobei der mindestens eine angeforderte D2D-Dienst einer oder mehrere der folgenden Diensttypen ist:
- ein D2D-Dienst, der mindestens einen D2D-Funkträger zur D2D-Kommunikation mit der zweiten UE (122) erfordert, wobei die erste UE 121 auch mit einem zellularen Dienst konfiguriert ist, der mindestens einen zellularen Funkträger erfordert;
- ein D2D-Dienst, der D2D-Entdeckungsressourcen benötigt, um die zweite UE (122) zu entdecken,
- ein D2D-Dienst, der mindestens einen D2D-Funkträger zur D2D-Kommunikation mit der zweiten UE (122) erfordert,
- ein D2D-Dienst, der D2D-Entdeckungsressourcen zum Empfangen von Entdeckungssignalen von der zweiten UE (122) erfordert, und
- ein D2D-Dienst, der mindestens einen D2D-Funkträger zur D2D-Kommunikation mit der zweiten UE (122) ohne netzgestützte Steuersignalisierung erfordert.

6. Verfahren nach einem der Ansprüche 1 bis 5, wobei das *Übertragen* (301a, 801a) ferner das Übertragen zusätzlicher Informationen umfasst, wobei die zusätzlichen Informationen eines oder mehrere von Folgendem umfassen:
- eine Identität der zweiten UE (122);
- einen maximalen Übertragungsleistungspegel für die D2D-Kommunikation mit der zweiten UE (122);
- eine Anzahl oder Menge von Funkressourcen für die D2D-Kommunikation mit der zweiten UE (122);
- eine oder mehrere UE-Kapazitäten spezifisch für die D2D Kommunikation mit der zweiten UE (122);
- einen oder mehrere QoS-Dienstparameter für einen D2D-Funkträger des mindestens einen angeforderten D2D-Dienstes;
- eine Zeitdauer für die D2D-Kommunikation mit der zweiten UE (122), und
- eine Identität einer Zelle, die durch einen Funkzugangsnetz-Knoten (RAN-Knoten) (110) in dem Funkkommunikationsnetz (100) bedient wird.

7. Erste Benutzereinrichtung, UE, (121) zum Ermöglichen einer Funkzugriffssteuerung, RAC, von mindestens einem Vorrichtung-zu-Vorrichtung-Dienst, D2D, für eine D2D-Kommunikation mit einer zweiten UE (122) in einem Funkkommunikationsnetz (100),
wobei die erste UE (121) konfiguriert ist, um eine D2D-Dienstanforderung, die mindestens eine D2D-Diensttyp-Kennung umfasst, die den mindestens einen D2D-Dienst angibt, an einen ersten Netzknoten (110, 131) in dem Funkkommunikationsnetz (100) zu übertragen und eine RAC-Gewährungsnachricht als Reaktion auf die übertragene D2D-Dienstanforderung zu empfangen, wobei
die RAC-Gewährungsnachricht für einen anderen D2D-Dienst als den angeforderten D2D-Dienst für die erste UE (121) ist, wenn nicht genügend Funkressourcen verfügbar sind, um eine D2D-Kommunikation zu unterstützen, die gemäß des mindestens einen angeforderten D2D durchgeführt wird.

8. Erste UE (121) gemäß Anspruch 7, ferner so konfiguriert, dass sie eine D2D-Kommunikation gemäß dem mindestens einen D2D-Dienst durchführt, der in der RAC-Gewährungsnachricht gewährt wird, wenn eine RAC-Gewährungnachricht empfangen wird.

9. Erste UE (121) nach Anspruch 7 oder 8, die ferner konfiguriert ist, um den mindestens einen D2D-Dienst, der für die D2D-Kommunikation mit der zweiten UE (122) zu verwenden ist, zu bestimmen und mindestens eine D2D-Diensttyp-Kennung auszuwählen, die den mindestens einen bestimmten D2D-Dienst anzeigt.

10. Erste UE (121) nach einem der Ansprüche 7 bis 9, wobei die D2D-Diensttyp-Kennung eine Dienstqualitäts-Klassenkennung, QoS, QCI, ist.

11. Erste UE (121) nach einem der Ansprüche 7 bis 10, wobei der mindestens eine angeforderte D2D-Dienst einer oder mehrere der folgenden Diensttypen ist:
- ein D2D-Dienst, der mindestens einen D2D-Funkträger zur D2D-Kommunikation mit der zweiten UE (122) erfordert, wobei die erste UE 121 auch mit einem zellularen Dienst konfiguriert ist, der mindestens einen zellularen Funkträger erfordert;
- ein D2D-Dienst, der D2D-Entdeckungsressourcen benötigt, um die zweite UE (122) zu entdecken,
- ein D2D-Dienst, der mindestens einen D2D-Funkträger zur D2D-Kommunikation mit der zweiten UE (122) erfordert,
- ein D2D-Dienst, der D2D-Entdeckungsressourcen zum Empfangen von Entdeckungssignalen von der zweiten UE (122) erfordert, und
- ein D2D-Dienst, der mindestens einen D2D-Funkträger zur D2D-Kommunikation mit der zweiten UE (122) ohne netzgestützte Steuersignalisierung erfordert.

12. Erste UE (121) nach einem der Ansprüche 7 bis 11, ferner konfiguriert, um zusätzliche Informationen an den ersten Netzknoten (110, 131) in dem Funkkommunikationsnetz (100) zu übertragen, wobei die zusätzlichen Informationen eines oder mehrere von Folgendem umfassen:
- eine Identität der zweiten UE (122);
- einen maximalen Übertragungsleistungspegel für die D2D-Kommunikation mit der zweiten UE (122);
- eine Anzahl oder Menge von Funkressourcen für die D2D-Kommunikation mit der zweiten UE (122);
- eine oder mehrere UE-Kapazitäten spezifisch für die D2D Kommunikation mit der zweiten UE (122);
- einen oder mehrere QoS-Dienstparameter für einen D2D-Funkträger des mindestens einen angeforderten D2D-Dienstes;
- eine Zeitdauer für die D2D-Kommunikation mit der zweiten UE (122), und
- eine Identität einer Zelle, die durch einen Funkzugangsnetz-Knoten, RAN, (110) in dem Funkkommunikationsnetz (100) bedient wird.

13. Von einem Funkzugangsnetz-Knoten (RAN-Knoten) (110) durchgeführtes Verfahren zum Durchführen der Funkzugriffssteuerung, RAC, von mindestens einem Vorrichtung-zu-Vorrichtung-Dienst, D2D, der durch eine erste Benutzereinrichtung, UE, (121) angefordert wurde, für eine D2D-Kommunikation mit einer zweiten UE (122) in einem Funkkommunikationsnetz (100), wobei das Verfahren Folgendes umfasst:
*Empfangen* (304b, 801b) einer D2D-Dienstanforderung oder einer D2D-Funkträger-Aufbauanforderung für mindestens einen D2D-Funkträger, der mindestens eine D2D-Diensttyp-Kennung umfasst, die den mindestens einen angeforderten D2D-Dienst angibt;
*Durchführen* (305, 802) der RAC des angeforderten D2D-Dienstes durch Bestimmen, ob genügend Funkressourcen verfügbar sind oder nicht, um eine gemäß dem angeforderten D2D-Dienst durchgeführte D2D-Kommunikation basierend auf der mindestens einen D2D-Diensttyp-Kennung zu unterstützen; und
*Übertragen* (306, 803) einer RAC-Gewährungsnachricht für einen anderen D2D-Dienst als den angeforderten D2D-Dienst an die erste UE (121), wenn bestimmt wird, dass nicht genügend Funkressourcen verfügbar sind, um eine D2D-Kommunikation zu unterstützen, die gemäß dem mindestens einen angeforderten D2D-Dienst durchgeführt wird.

14. Verfahren nach Anspruch 13, ferner umfassend:
*Übertragen* (306a, 803a) einer RAC-Gewährungsnachricht für den angeforderten D2D-Dienst an die erste UE (121), wenn bestimmt wird, dass genügend Funkressourcen verfügbar sind, um eine D2D-Kommunikation zu unterstützen, die gemäß dem mindestens einen angeforderten D2D-Dienst durchgeführt wird.

15. Verfahren nach Anspruch 13, ferner umfassend:
*Übertragen* (306a, 803a) einer RAC-Zurückweisungsnachricht für den angeforderten D2D-Dienst an die erste UE (121), wenn bestimmt wird, dass nicht genügend Funkressourcen verfügbar sind, um eine D2D-Kommunikation zu unterstützen, die gemäß dem mindestens einen angeforderten D2D-Dienst durchgeführt wird.

16. Verfahren nach einem der Ansprüche 13 bis 15, wobei die D2D-Diensttyp-Kennung eine Dienstqualitäts-Klassenkennung, QoS, QCI, ist.

17. Verfahren nach einem der Ansprüche 13 bis 16, wobei der mindestens eine angeforderte D2D-Dienst einer oder mehrere der folgenden Diensttypen ist:
- ein D2D-Dienst, der mindestens einen D2D-Funkträger zur D2D-Kommunikation mit der zweiten UE (122) erfordert, wobei die erste UE 121 auch mit einem zellularen Dienst konfiguriert ist, der mindestens einen zellularen Funkträger erfordert;
- ein D2D-Dienst, der einen D2D-Entdeckungsträger erfordert, um die zweite UE (122) zu entdecken,
- ein D2D-Dienst, der mindestens einen D2D-Funkträger zur D2D-Kommunikation mit der zweiten UE (122) erfordert,
- ein D2D-Dienst, der einen D2D-Entdeckungsträger zum Empfangen von Entdeckungssignalen von der zweiten UE (122) erfordert, und
- ein D2D-Dienst, der mindestens einen D2D-Funkträger zur D2D-Kommunikation mit der zweiten UE (122) ohne netzgestützte Steuersignalisierung erfordert.

18. Funkzugangsnetz-Knoten, RAN-Knoten, (110) zum Durchführen der Funkzugriffssteuerung, RAC, von mindestens einem Vorrichtung-zu-Vorrichtung-Dienst, D2D-Dienst, der durch eine erste Benutzereinrichtung, UE, (121) angefordert wurde, für eine D2D-Kommunikation mit einer zweiten UE (122) in einem Funkkommunikationsnetz (100),
wobei der RAN-Knoten (110) konfiguriert ist zum Empfangen einer D2D-Dienstanforderung oder einer D2D-Funkträger-Aufbauanforderung für den mindestens einen D2D-Funkträger, der mindestens eine D2D-Diensttyp-Kennung umfasst, die den mindestens einen angeforderten D2D-Dienst angibt, und zum Durchführen der RAC des angeforderten D2D-Dienstes durch Bestimmen, ob ausreichend Funkressourcen zur Unterstützung einer D2D-Kommunikation, die in Übereinstimmung mit dem angeforderten D2D-Dienst basierend auf der mindestens einen D2D-Diensttyp-Kennung durchgeführt wird, zur Verfügung stehen oder nicht, und
der RAN-Knoten (110) ist ferner konfiguriert, um eine RAC-Gewährungsnachricht für einen anderen D2D-Dienst als den angeforderten D2D-Dienst an die erste UE (121) zu senden, wenn bestimmt wird, dass nicht genügend Funkressourcen verfügbar sind, um eine D2D-Kommunikation zu unterstützen, die gemäß dem mindestens einen angeforderten D2D-Dienst durchgeführt wird.

## Revendications

1. Procédé mis en oeuvre par un premier équipement utilisateur, UE (121), pour permettre une commande d'admission radio, RAC, d'au moins un service de dispositif à dispositif, D2D, pour une communication D2D avec un deuxième UE (122) dans un réseau de communications radio (100), le procédé comprenant
la *transmission* (301a, 801a) d'une demande de service D2D comprenant au moins un indicateur de type de service D2D indiquant l'au moins un service D2D à un premier noeud de réseau (110, 131) dans le réseau de communications radio (100), et
la *réception* (306b, 803b) d'un message d'autorisation RAC en réponse à la demande de service D2D transmise, dans lequel le message d'autorisation RAC est pour un autre service D2D que le service D2D demandé au premier UE (121) lorsqu'il n'y a pas de ressources radio suffisantes disponibles pour prendre en charge une communication D2D mise en oeuvre conformément à l'au moins un D2D demandé.

2. Procédé selon la revendication 1, comprenant en outre, lorsqu'un message d'autorisation RAC est reçu, la *mise en oeuvre* (309, 806) d'une communication D2D conformément à l'au moins un service D2D autorisé dans le message d'autorisation RAC.

3. Procédé selon la revendication 1 ou 2, comprenant en outre la *détermination* (300, 800) de l'au moins un service D2D à utiliser pour la communication D2D avec le deuxième UE (122) et la sélection d'au moins un indicateur de type de service D2D indiquant l'au moins un service D2D déterminé.

4. Procédé selon l'une quelconque des revendications 1 à 3, dans lequel l'indicateur de type de service D2D est un identificateur de classe de qualité de service, QoS, QCI.

5. Procédé selon l'une quelconque des revendications 1 à 4, dans lequel l'au moins un service D2D demandé est un ou plusieurs parmi les types de service suivants :
- un service D2D exigeant au moins une porteuse radio D2D pour une communication D2D avec le deuxième UE (122), dans lequel le premier UE (121) est également configuré avec un service cellulaire exigeant au moins une porteuse radio cellulaire ;
- un service D2D exigeant des ressources de découverte D2D pour découvrir le deuxième UE (122),
- un service D2D exigeant au moins une porteuse radio D2D pour une communication D2D avec le deuxième UE (122),
- un service D2D exigeant des ressources de découverte D2D pour recevoir des signaux de découverte depuis le deuxième UE (122), et
- un service D2D exigeant au moins une porteuse radio D2D pour une communication D2D avec le deuxième UE (122) sans signalisation de commande assistée par réseau.

6. Procédé selon l'une quelconque des revendications 1 à 5, dans lequel la *transmission* (301a, 801a) comprend en outre la transmission d'informations supplémentaires, dans lequel lesdites informations supplémentaires comprennent un ou plusieurs parmi :
- une identité du deuxième UE (122) ;
- un niveau de puissance maximale de transmission pour la communication D2D avec le deuxième UE (122) ;
- un nombre ou une quantité de ressources radio pour la communication D2D avec le deuxième UE (122) ;
- une ou plusieurs capacités d'UE spécifiques pour la communication D2D avec le deuxième UE (122) ;
- un ou plusieurs paramètres de service QoS pour une porteuse radio D2D de l'au moins un service D2D demandé ;
- une durée de temps pour la communication D2D avec le deuxième UE (122), et
- une identité d'une cellule desservie par un noeud de réseau d'accès radio, RAN (110) dans le réseau de communications radio (100).

7. Premier équipement utilisateur, UE (121), pour permettre une commande d'admission radio, RAC, d'au moins un service de dispositif à dispositif, D2D, pour une communication D2D avec un deuxième UE (122) dans un réseau de communications radio (100), le premier UE (121) étant configuré pour transmettre une demande de service D2D comprenant au moins un indicateur de type de service D2D indiquant l'au moins un service D2D à un premier noeud de réseau (110, 131) dans le réseau de communications radio (100), et recevoir un message d'autorisation RAC en réponse à la demande de service D2D transmise, dans lequel le message d'autorisation RAC est pour un autre service D2D que le service D2D demandé au premier UE (121) lorsqu'il n'y a pas de ressources radio suffisantes disponibles pour prendre en charge une communication D2D mise en oeuvre conformément à l'au moins un D2D demandé.

8. Premier UE (121) selon la revendication 7, configuré en outre pour mettre en oeuvre une communication D2D conformément à l'au moins un service D2D autorisé dans le message d'autorisation RAC lorsqu'un message d'autorisation RAC est reçu.

9. Premier UE (121) selon la revendication 7 ou 8, configuré en outre pour déterminer l'au moins un service D2D à utiliser pour la communication D2D avec le deuxième UE (122), et sélectionner au moins un indicateur de type de service D2D indiquant l'au moins un service D2D déterminé.

10. Premier UE (121) selon l'une quelconque des revendications 7 à 9, dans lequel l'indicateur de type de service D2D est un identificateur de classe de qualité de service, QoS, QCI.

11. Premier UE (121) selon l'une quelconque des revendications 7 à 10, dans lequel l'au moins un service D2D demandé est un ou plusieurs parmi les types de service suivants :
- un service D2D exigeant au moins une porteuse radio D2D pour une communication D2D avec le deuxième UE (122), dans lequel le premier UE (121) est également configuré avec un service cellulaire exigeant au moins une porteuse radio cellulaire ;
- un service D2D exigeant des ressources de découverte D2D pour découvrir le deuxième UE (122),
- un service D2D exigeant au moins une porteuse radio D2D pour une communication D2D avec le deuxième UE (122),
- un service D2D exigeant des ressources de découverte D2D pour recevoir des signaux de découverte depuis le deuxième UE (122), et
- un service D2D exigeant au moins une porteuse radio D2D pour une communication D2D avec le deuxième UE (122) sans signalisation de commande assistée par réseau.

12. Premier UE (121) selon l'une quelconque des revendications 7 à 11, configuré en outre pour transmettre des informations supplémentaires au premier noeud de réseau (110, 131) dans le réseau de communications radio (100), dans lequel lesdites informations supplémentaires comprennent un ou plusieurs parmi :
- une identité du deuxième UE (122) ;
- un niveau de puissance maximale de transmission pour la communication D2D avec le deuxième UE (122) ;
- un nombre ou une quantité de ressources radio pour la communication D2D avec le deuxième UE (122) ;
- une ou plusieurs capacités d'UE spécifiques pour la communication D2D avec le deuxième UE (122) ;
- un ou plusieurs paramètres de service QoS pour une porteuse radio D2D de l'au moins un service D2D demandé ;
- une durée de temps pour la communication D2D avec le deuxième UE (122), et
- une identité d'une cellule desservie par un noeud de réseau d'accès radio, RAN (110) dans le réseau de communications radio (100).

13. Procédé mis en oeuvre par un noeud de réseau d'accès radio, RAN (110) pour mettre en oeuvre une commande d'admission radio, RAC, d'au moins un service de dispositif à dispositif, D2D, demandé par un premier équipement utilisateur, UE (121), pour une communication D2D avec un deuxième UE (122) dans un réseau de communications radio (100), le procédé comprenant
la *réception* (304b, 801b) d'une demande de service D2D ou d'une demande d'établissement de porteuse radio D2D pour au moins une porteuse radio D2D comprenant au moins un indicateur de type de service D2D indiquant l'au moins un service D2D demandé ;
la *mise en oeuvre* (305, 802) de la RAC du service D2D demandé en déterminant s'il y a ou non des ressources radio suffisantes disponibles pour prendre en charge une communication D2D mise en oeuvre conformément au service D2D demandé sur la base de l'au moins un indicateur de type de service D2D ; et
la *transmission* (306, 803) d'un message d'autorisation RAC pour un autre service D2D que le service D2D demandé au premier UE (121) lorsqu'il est déterminé qu'il n'y a pas de ressources radio suffisantes disponibles pour prendre en charge une communication D2D mise en oeuvre conformément à l'au moins un service D2D demandé.

14. Procédé selon la revendication 13, comprenant en outre la *transmission* (306a, 803a) d'un message d'autorisation RAC pour le service D2D demandé au premier UE (121) lorsqu'il est déterminé qu'il y a des ressources radio suffisantes disponibles pour prendre en charge une communication D2D mise en oeuvre conformément à l'au moins un service D2D demandé.

15. Procédé selon la revendication 13, comprenant en outre la *transmission* (306a, 803a) d'un message de rejet RAC pour le service D2D demandé au premier UE (121) lorsqu'il est déterminé qu'il n'y a pas de ressources radio suffisantes disponibles pour prendre en charge une communication D2D mise en oeuvre conformément à l'au moins un service D2D demandé.

16. Procédé selon l'une quelconque des revendications 13 à 15, dans lequel l'indicateur de type de service D2D est un identificateur de classe de qualité de service, QoS, QCI.

17. Procédé selon l'une quelconque des revendications 13 à 16, dans lequel l'au moins un service D2D demandé est un ou plusieurs parmi les types de service suivants :
- un service D2D exigeant au moins une porteuse radio D2D pour une communication D2D avec le deuxième UE (122), dans lequel le premier UE 121 est également configuré avec un service cellulaire exigeant au moins une porteuse radio cellulaire ;
- un service D2D exigeant une porteuse de découverte D2D pour découvrir le deuxième UE (122),
- un service D2D exigeant au moins une porteuse radio D2D pour une communication D2D avec le deuxième UE (122),
- un service D2D exigeant une porteuse de découverte D2D pour recevoir des signaux de découverte depuis le deuxième UE (122), et
- un service D2D exigeant au moins une porteuse radio D2D pour une communication D2D avec le deuxième UE (122) sans signalisation de commande assistée par réseau.

18. Noeud de réseau d'accès radio, RAN (110) pour mettre en oeuvre une commande d'admission radio, RAC, d'au moins un service de dispositif à dispositif, D2D, demandé par un premier équipement utilisateur, UE (121), pour une communication D2D avec un deuxième UE (122) dans un réseau de communications radio (100),
le noeud RAN (110) étant configuré pour recevoir une demande de service D2D ou une demande d'établissement de porteuse radio D2D pour l'au moins une porteuse radio D2D comprenant au moins un indicateur de type de service D2D indiquant l'au moins un service D2D demandé, et mettre en oeuvre une RAC du service D2D demandé en déterminant s'il y a ou non des ressources radio suffisantes disponibles pour prendre en charge une communication D2D mise en oeuvre conformément au service D2D demandé sur la base de l'au moins un indicateur de type de service D2D, et
le noeud RAN (110) est en outre configuré pour transmettre un message d'autorisation RAC pour un autre service D2D que le service D2D demandé au premier UE (121) lorsqu'il est déterminé qu'il n'y a pas de ressources radio suffisantes disponibles pour prendre en charge une communication D2D mise en oeuvre conformément à l'au moins un service D2D demandé.
